(19) **Europäisches Patentamt European Patent Office Office européen des brevets**

(11) **EP 4 753 358 A1**

(12) **EUROPEAN PATENT APPLICATION**
published in accordance with Art. 153(4) EPC

(43) Date of publication:
03.06.2026 Bulletin 2026/23

(21) Application number: 24868504.2

(22) Date of filing: 26.08.2024

(51) International Patent Classification (IPC):
H04W 74/04 (2009.01)     H04W 74/00 (2009.01)
H04W 28/26 (2009.01)     H04W 72/0446 (2023.01)
H04J 3/16 (2006.01)     H04W 84/12 (2009.01)
H04W 74/0816 (2024.01)     H04W 72/50 (2023.01)
H04L 5/22 (2006.01)

(52) Cooperative Patent Classification (CPC):
H04J 3/16; H04L 5/22; H04W 28/26;
H04W 72/0446; H04W 72/50; H04W 74/00;
H04W 74/04; H04W 74/0816; H04W 84/12

(86) International application number:
PCT/KR2024/012732

(87) International publication number:
WO 2025/063525 (27.03.2025 Gazette 2025/13)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 20.09.2023 KR 20230125666
13.12.2023 KR 20230180935
29.12.2023 KR 20230197594
07.02.2024 KR 20240019060
08.02.2024 KR 20240019947
16.02.2024 KR 20240022842

(71) Applicant: **LG Electronics Inc.**
**Yeongdeungpo-gu**
**Seoul 07336 (KR)**

(72) Inventors:
• **KIM, Geonhwan**
**Seoul 06772 (KR)**
• **CHOI, Jinsoo**
**Seoul 06772 (KR)**
• **JANG, Insun**
**Seoul 06772 (KR)**
• **BAEK, Sunhee**
**Seoul 06772 (KR)**
• **YOON, Yelin**
**Seoul 06772 (KR)**
• **CHA, Dongju**
**Seoul 06772 (KR)**

(74) Representative: **Jung, Minkyu**
**Wuesthoff & Wuesthoff**
**Patentanwälte und Rechtsanwalt PartG mbB**
**Schweigerstraße 2**
**81541 München (DE)**

(54) **METHOD AND APPARATUS FOR PERFORMING C-TDMA OPERATION BY RECEIVING ADDITIONAL CTS FRAME IN WIRELESS LAN SYSTEM**

(57)     Presented are a method and an apparatus for performing a C-TDMA operation by receiving an additional CTS frame in a wireless LAN system. Specifically, a first AP receives an MU-RTS trigger frame from a second AP. The first AP transmits a first CTS frame to the second AP, receives a second CTS frame from the second AP, and transmits a TXOP return sequence to the second AP.

FIG. 31

EP 4 753 358 A1

**Description**

**TECHNICAL FIELD**

This specification relates to a technique for performing a C-TDMA operation based on receiving an additional CTS frame in a wireless LAN system, and more specifically, relates to a method and apparatus for protecting a SAP by setting a NAV to prevent a third party STA or OBSS STA from occupying a medium based on transmitting the additional CTS frame.

**BACKGROUND ART**

Next-generation Wi-Fi (e.g., IEEE 802.11be and/or later) aims to support ultra-high reliability when transmitting signals to STAs. To achieve this, various technologies are being considered to support high throughput, low latency, and extended range. For example, multiple APs can cooperate to perform TXOP sharing procedures.

**DISCLOSURE**

**TECHNICAL PROBLEM**

This specification proposes a method and apparatus for performing a C-TDMA operation based on receiving an additional CTS frame in a wireless LAN system.

**TECHNICAL SOLUTION**

An example of this specification proposes a method for performing a C-TDMA operation based on receiving an additional CTS frame.
This embodiment may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.1 The system.
The present embodiment is performed in a first AP, the first AP may be set as a shared AP (DAP) after negotiation in multi-AP communication, and the second AP may be set as a sharing AP (SAP) after negotiation in the multi-AP communication. First and second non-AP STAs of the present embodiment may correspond to at least one station (STA).
The present embodiment proposes a method for protecting a SAP by setting a NAV to prevent a third party STA or Overlapping Basic Service Set (OBSS) STA from occupying a medium based on transmitting an additional CTS frame when performing a C-TDMA operation in communication between Multi-Access Point (Multi-AP) (or Multi-AP operation). In particular, the present embodiment proposes a method for reserving a medium to prevent a TXOP return fail issue based on setting the NAV.
A first access point (AP) receives a Multi User-Request to Send (MU-RTS) Transmit Opportunity (TXOP) sharing (TXS) trigger frame from a second AP.
The first AP transmits a first Clear to Send (CTS) frame to the second AP.
The first AP receives a second CTS frame from the second AP.
The first AP transmits a TXOP return sequence to the second AP.
The second AP is a Sharing AP that controls coordination between a plurality of APs, and the first AP is a Shared AP that is allocated or shared with resources from the Sharing AP.
The first CTS frame is a response frame to the MU-RTS TXS trigger frame. A first Network Allocation Vector (NAV) is set for a first non-AP station (STA) based on the second CTS frame. Alternatively, a second NAV is set for the first non-AP STA based on the MU-RTS TXS trigger frame, and a NAV timer may be updated before a NAV timeout duration of the second NAV expires based on the second CTS frame. Alternatively, a third NAV is set for the first non-AP STA based on a first NAV setting sequence described later, and the NAV timer may be updated before a NAV timeout duration of the third NAV expires based on the second CTS frame. For example, channel access of the first non-AP STA may be suspended based on setting a new NAV or preventing a NAV timeout issue of an existing NAV due to the additionally transmitted second CTS frame.
At this time, the first non-AP STA does not participate in the coordination between the plurality of APs and is in a hidden node relationship with the first AP.
A scheme for the coordination between the plurality of APs may include a coordinated Multi-AP scheme such as Coordinated-Time Division Multiplexing Access (C-TDMA), Coordinated-Spatial Reuse (C-SR), Coordinated-beamforming (C-BF) or Coordinated-Orthogonal Frequency Division Multiple Access (C-OFMA).
In an example of the C-TDMA operation, an entity sharing a TXOP (SAP, here the second AP) and an entity being shared with the TXOP (DAP, here the first AP) are APs having different BSSs. However, a STA (third party STA or OBSS STA, here the first non-AP STA) that is in a hidden node relationship with the DAP and does not participate in the C-TDMA operation may determine that the medium is idle based on a duration in which the SAP shares the TXOP with the DAP, and thus may occupy the medium used by the SAP based on performing channel access. In addition, the third party STA or OBSS STA may occupy the medium based on resetting the NAV based on a NAV timeout duration due to the MU-RTS TXS trigger frame expiring based on failing to receive a response frame to the MU-RTS TXS trigger frame. For example, even based on the DAP performing the TXOP return based on using the time allocated from the SAP, a problem may occur in which the SAP may not receive the TXOP return because the third party STA or OBSS STA may occupy the medium.

Accordingly, the present embodiment proposes a method for reserving a medium to ensure that the SAP may receive the TXOP return in an environment for performing the C-TDMA. Specifically, a method for protecting the SAP is proposed based on setting a NAV (the first NAV) to prevent the third party STA or OBSS STA from occupying the medium based on transmitting an additional CTS frame (the second CTS frame).

## ADVANTAGEOUS EFFECTS

The present embodiment proposes a medium reservation method for preventing a TXOP return fail issue that may occur in a C-TDMA procedure utilizing a plurality of TXOPs. There is an effect that the SAP may be protected from a NAV based on the medium reservation method proposed in the present embodiment to prevent a third party STA or OBSS STA (the first non-AP STA) from occupying a medium. For example, there is an effect that the DAP may allow neighboring STAs of the SAP to set a NAV during a corresponding time based on performing a frame exchange for a NAV-set sequence with the SAP in a time allocated from the SAP. Based on this, appropriate scheduling according to coordination between a plurality of APs may be performed, and an effect of expecting an increase in overall network throughput exists.

## BRIEF DESCRIPTION OF THE DRAWINGS

FIG. 1 shows an example of a transmitting apparatus and/or receiving apparatus of the present specification.

FIG. 2 is a conceptual view illustrating the structure of a wireless local area network (WLAN).

FIG. 3 illustrates a general link setup process.

FIG. 4 shows an example of a multi-link (ML).

FIG. 5 shows an example of a physical protocol data unit or physical layer (PHY) protocol data unit (PPDU) transmitted/received by an STA of the present disclosure.

FIG. 6 is a diagram illustrating the layout of resource units (RUs) used for a 20 MHz PPDU.

FIG. 7 is a diagram illustrating the layout of resource units (RUs) used for 40MHz PPDU.

FIG. 8 is a diagram illustrating the layout of resource units (RUs) used for an 80MHz PPDU.

FIG. 9 shows an operation related to UL-MU.

FIG. 10 illustrates an example of channels used/supported/defined within the 2.4 GHz band.

FIG. 11 illustrates an example of channels used/supported/defined within the 5 GHz band.

FIG. 12 illustrates an example of channels used/supported/defined within the 6 GHz band.

FIG. 13 illustrates an example of a modified transmission device and/or receiving device of the present specification.

FIG. 14 illustrates operation according to a conventional STX operation.

FIG. 15 illustrates an example of Coordinated OFDMA (C-OFDMA).

FIG. 16 illustrates an example of Coordinated Beamforming (CBF).

FIG. 17 illustrates an example of AP selection.

FIG. 18 illustrates an example of JTX/JT.

FIG. 19 illustrates an example of an operation of an MU-RTS TXS trigger frame based on a value of a TXOP Sharing Mode subfield being 2.

FIG. 20 illustrates an example of a coordinated TDMA operation.

FIG. 21 illustrates an example of a C-TDMA operation based on using Two TXOPs.

FIG. 22 illustrates an example of a TXOP return fail issue due to a Hidden node (STA 3).

FIG. 23 illustrates a first embodiment of a medium reservation method for a TXOP return in a C-TDMA procedure.

FIG. 24 illustrates a second embodiment of a medium reservation method for a TXOP return in a C-TDMA procedure.

FIG. 25 illustrates a third embodiment of a medium reservation method for a TXOP return in a C-TDMA procedure.

FIG. 26 illustrates a fourth embodiment of a medium reservation method for a TXOP return in a C-TDMA procedure.

FIG. 27 illustrates a fifth embodiment of a medium reservation method for a TXOP return in a C-TDMA procedure.

FIG. 28 illustrates a sixth embodiment of a medium reservation method for a TXOP return in a C-TDMA procedure.

FIG. 29 is a procedure flowchart illustrating an operation of a transmitting apparatus based on the present embodiment.

FIG. 30 is a procedure flowchart illustrating an operation of a receiving apparatus based on the present embodiment.

FIG. 31 is a flowchart illustrating a procedure of a method for performing a C-TDMA operation based on transmitting an additional CTS frame in terms of a Sharing AP based on the present embodiment.

FIG. 32 is a flowchart illustrating a procedure of a method for performing a C-TDMA operation based on receiving an additional CTS frame in terms of a Shared AP based on the present embodiment.

## MODE FOR INVENTION

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11a/g/n/ac/ax/be/bn standard. In addition, an example of the present disclosure can also be applied to a next-generation wireless LAN standard that enhances the Ultra High Reliability (UHR) standard or IEEE 802.11bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

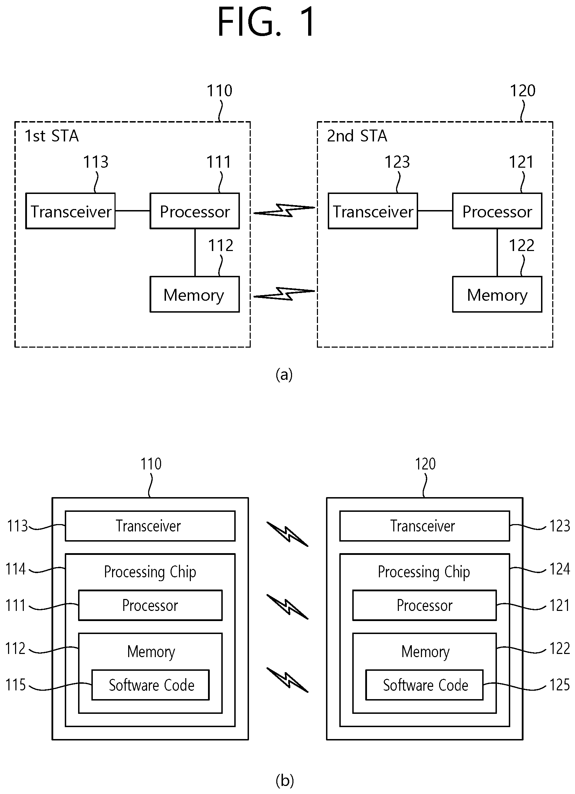

FIG. 1 shows an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGONTM series of processors made by Qualcomm®, EXYNOSTM series of processors made by Samsung®, A series of processors made by Apple®, HELIOTM series of processors made by MediaTek®, ATOMTM series of processors made by Intel® or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

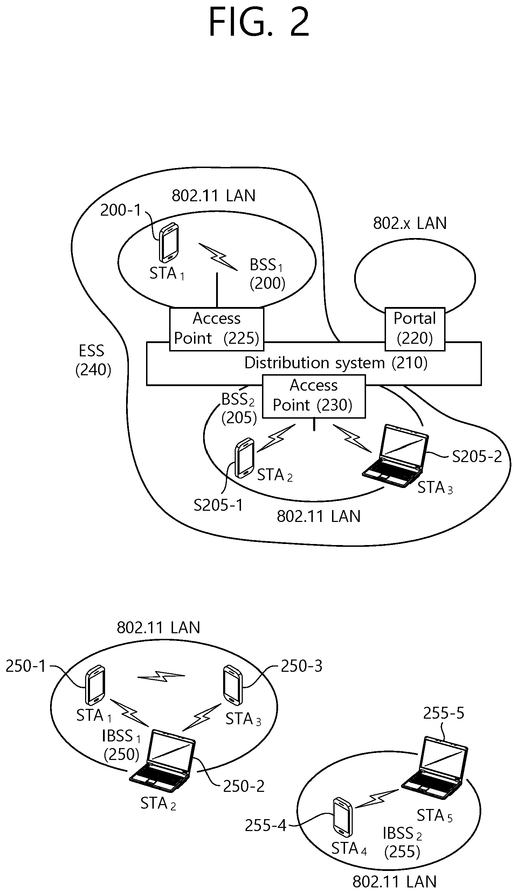

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, an AP 225, 230 providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a selfcontained network.

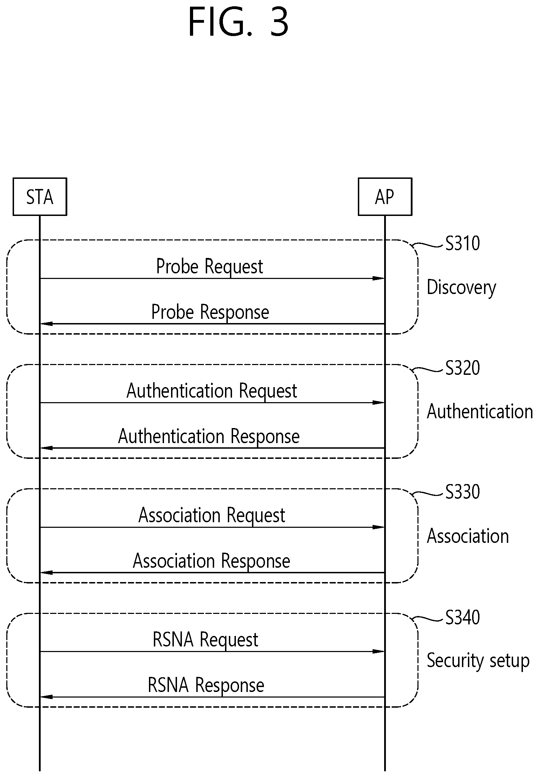

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

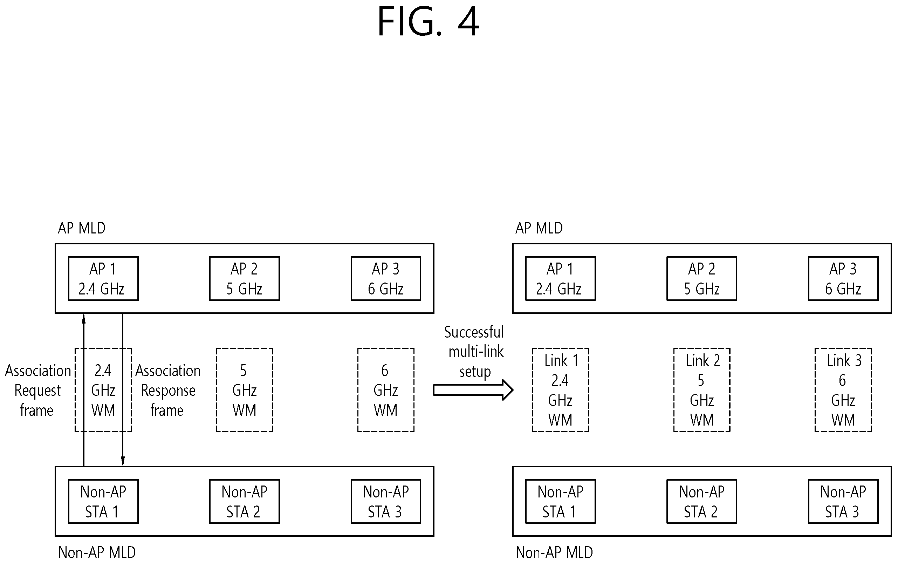

FIG. 4 shows an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1 and non-AP1 operate may be defined as a channel/subchannel/frequency resource within the 2.4 GHz band. In addition, in the example of FIG. 4, the second link in which AP2 and non-AP2 operate may be defined as a channel/-subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4, AP1 can start a multi-link setup procedure (ML setup procedure) by transmitting an association request frame to non-AP STA1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2.

The specific features of the present disclosure are not limited to the specific features of FIG. 4. That is, the number of links can be defined in various ways, and multiple links can be defined in various ways within at least one band.

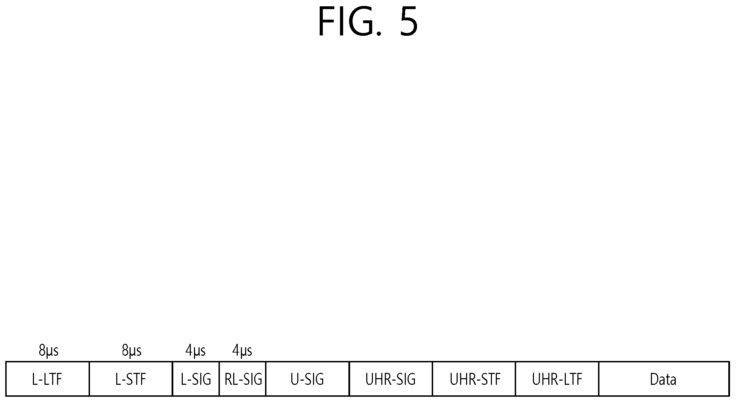

FIG. 5 shows an example of a physical protocol data unit or physical layer (PHY) protocol data unit (PPDU) transmitted/received by an STA of the present disclosure.

An STA (e.g., an AP STA, a non-AP STA, an AP MLD, a non-AP MLD) of the present disclosure can transmit and/or receive a PPDU of FIG. 5. The PPDU described in the present disclosure can have, for example, a structure of FIG. 5. In addition, the PPDU described in the present disclosure can be called by various names such as a transmission PPDU, a reception PPDU, a first type or an Nth type PPDU, etc. The PPDU described in the present disclosure can be used in a WLAN system defined according to IEEE 802.11bn and/or a next-generation WLAN system that improves IEEE 802.11bn.

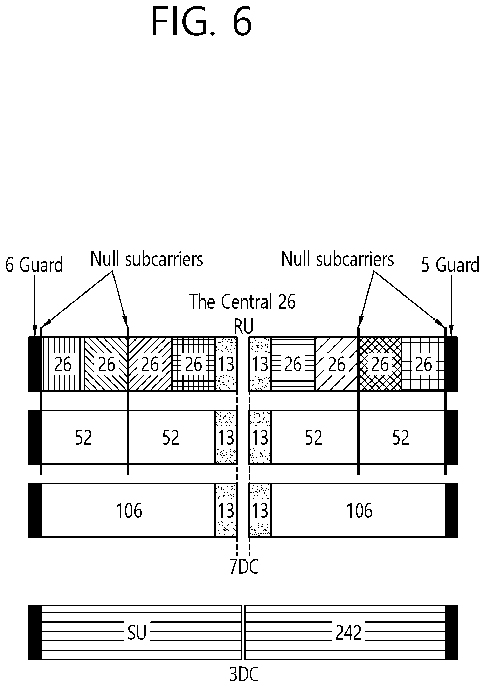

The PPDU of FIG. 5 can be related to various PPDU types used in a UHR system. For example, the example of FIG. 5 can be used for at least one of single-user (SU) mode/type/transmission, multi-user (MU) mode/type/transmission, and null-data packet (NDP) mode/type/transmission related to channel sounding. For example, if the example of FIG. 5 is related to NDP, the data field illustrated can be omitted. If the PPDU of FIG. 5 is used for trigger-based (TB) mode, UHR-SIG of FIG. 6 can be omitted. In other words, an STA that has received a trigger frame for uplink-MU (UL-MU) communication can transmit a PPDU with UHR-SIG omitted in the example of FIG. 5.

In FIG. 5, L-STF or UHR-LTF may be called a preamble or a physical preamble, and may be generated/transmitted/received/acquired/decoded in the physical layer (included in the transmitting/receiving STA).

Each block illustrated in FIG. 5 may be called a field/subfield/signal, etc. The names of these fields/subfields/signals may be legacy short training field (L-STF), legacy long training field (L-LTF), legacy signal (L-SIG), repeated L-SIG (RL-SIG), universal signal (U-SIG), UHR-signal (UHR-SIG), etc., as illustrated in FIG. 5.

A subcarrier spacing of the L-STF, L-LTF, L-SIG, RL-SIG, U-SIG, and UHR-SIG fields of FIG. 5 may be determined as 312.5 kHz, and a subcarrier spacing of the UHR-STF, UHR-LTF, and Data fields may be determined as 78.125 kHz. That is, a tone index (or subcarrier index) of the L-STF, L-LTF, L-SIG, RL-SIG, U-SIG, and UHR -SIG fields may be expressed in unit of 312.5 kHz, and a tone index (or subcarrier index) of the UHR-STF, UHR-LTF, and Data fields may be expressed in unit of 78.125 kHz.

In the PPDU of FIG. 5, the L-LTF and the L-STF may be the same as those in the conventional fields (for example, non-HT LTF and non-HT STF defined in conventional WLAN standards).

The L-SIG field of FIG. 5 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-high throughput (HT), high throughput (HT), very high throughput (VHT) PPDU, extremely high throughput (EHT) PPDU or UHR PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI, EHT PPDU or the UHR PPDU, the value of the length field may be determined as a multiple of 3, and for the high efficiency (HE) PPDU, the value of the length field may be determined as "a multiple of 3"+1 or "a multiple of 3"+2. In other words, the LENGTH field in an UHR PPDU is set to a value satisfying the condition that the remainder is zero when LENGTH is divided by 3

For example, the (non-AP and AP) STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index {-28, -27, +27, +28}. The aforementioned signal may be used for channel estimation in the frequency domain corresponding to {-28, -27, +27, +28}.

For example, the (non-AP and AP) STA may generate an RL-SIG generated in the same manner as the L-SIG. BPSK modulation may be applied to the RL-SIG. The (non-AP and AP) STA may know that the RX PPDU is the HE PPDU, EHT PPDU, or the UHR PPDU, based on the presence of the RL-SIG. In other words, a receiving (non-AP and AP) STA can know that a received PPDU is one of a HE PPDU, an EHT PPDU, and a UHR PPDU if RL-SIG is present. In other words, a receiving (non-AP and AP) STA can know that a received PPDU is one of a non-HT PPDU, an HT PPDU, and a VHT PPDU if RL-SIG is not present. In other words, the RL-SIG field is a repeat of the L-SIG field and is used to differentiate a UHR PPDU from a non-HT PPDU, HT PPDU, and VHT PPDU.

A universal SIG (U-SIG) may be inserted after the RL-SIG of FIG. 6. The U-SIG may be called in various terms such as a first SIG field, a first SIG, a first type SIG, a control signal, a control signal field, a first (type) control signal, common control field, common control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4us. Each symbol of the U-SIG may be used to transmit the 26-bit information. For example, each symbol of the U-SIG may be transmitted/received based on 52 data tomes and 4 pilot tones.

Through the U-SIG for example, A-bit information (e.g., 52 un-coded bits) may be transmitted. A first symbol of the U-SIG may transmit first X-bit information (e.g., 26 un-coded bits) of the A-bit information, and a second symbol of the U-SIG may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, '000000'.

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits (for example, 000 value) may indicate that the TX/RX PPDU is an EHT PPDU. Also, a second value of the PHY version identifier of 3 bits (for example, 001 value) may indicate that the TX/RX PPDU is a UHR PPDU.

In other words, when the (AP/non-AP) STA transmits an EHT PPDU, the 3-bit PHY version identifier can be set to the first value, and when the (AP/non-AP) STA transmits a UHR PPDU, the 3-bit PHY version identifier can be set to the second value. In other words, the receiving (AP/non-AP) STA can determine that the received PPDU is an EHT PPDU based on the PHY version identifier having the first value, and can determine that the received PPDU is a UHR PPDU based on the PHY version identifier having the second value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a transmission opportunity (TXOP) length and information related to a BSS color ID.

For example, if a UHR PPDU is classified into various types (e.g., type related to SU transmission (performed based on UL or DL), type related to DL transmission, type related to NDP transmission, type related to DL non-MU-MIMO, type related to DL MU-MIMO, type related to multi-AP operation, type related to coordinated beamforming (Co-BF), spatial reuse (SR), type related to coordinated OFDMA (C-OFDMA), type related to coordinated TDMA (Co-TDMA)), information about the type of the UHR PPDU (e.g., 2-bit or 3-bit information) can be included in the version-dependent bits of the U-SIG.

For example, the U-SIG may include: 1) a bandwidth field including information related to a bandwidth; 2) a field including information related to an modulation and coding scheme (MCS) applied to UHR-SIG; 3) an indication field including information regarding whether a dual subcarrier modulation (DCM) scheme is applied to UHR-SIG; 4) a field including information related to the number of symbol used for UHR-SIG; 5) a field including information regarding whether the UHR-SIG is generated across a full band; 6) a field including information related to a type of UHR-LTF/STF; and 7) information related to a field indicating an UHR-LTF length and a CP length.

Preamble puncturing may be applied to the PPDU of FIG. 5. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or UHR-SIG. For example, a first field of the U-SIG may include information related to a contiguous bandwidth, and second field of the U-SIG may include information related to the preamble puncturing applied to the PPDU.

For example, the U-SIG and the UHR-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an UHR-SIG contiguous to the first U-SIG may include information related to a preamble puncturing applied to the second 80 MHz band (i.e., information related to a preamble puncturing pattern), and an UHR-SIG contiguous to the second U-SIG may include information related to a preamble puncturing (i.e., information related to a preamble puncturing pattern) applied to the first 80 MHz band.

Additionally or alternatively, the U-SIG and the UHR-SIG may include the information related to the preamble puncturing, based on the following method. The U-SIG may include information related to a preamble puncturing (i.e., information related to a preamble puncturing pattern) for all bands. That is, the UHR-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The UHR-SIG of FIG. 5 may include control information for the receiving STA. The UHR-SIG may be transmitted through at least one symbol, and one symbol may have a length of 4us. Information related to the number of symbols used for the UHR-SIG may be included in the U-SIG.

UHR-SIG provides an additional signal to the U-SIG field to enable STA to interpret/decode UHR PPDU. UHR-SIG field may include U-SIG overflow bits that are commonly applied to all users. In addition, UHR-SIG field includes resource allocation information, so that STA can look-up resources used in fields including data field/UHR-STF/UHR-LTF (i.e., UHR modulated fields of a UHR PPDU).

Frequency resources of UHR-LTF, UHR-STF, and data fields illustrated in FIG. 5 may be determined based on RUs (resource units) defined by multiple subcarriers/tones. That is, UHR-LTF, UHR-STF, and data fields of the present disclosure may be transmitted/received through RUs (resource units) defined by multiple subcarriers/tones.

FIG. 6 is a diagram illustrating the layout of resource units (RUs) used for a 20 MHz PPDU. That is, the UHR-LTF, UHR-STF, and/or data fields included in the 20 MHz PPDU may be transmitted/received through at least one of the various RUs defined in FIG. 6.

As illustrated in the uppermost part of FIG. 6, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

Meanwhile, the layout of the RUs in FIG. 6 may be used not only for a multiple users (MUs) but also for a single user (SU), in which case one 242-unit may be used and three DC tones may be inserted as illustrated in the lowermost part of FIG. 6.

Although FIG. 6 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones). In this specification, N-RU may be represented as N-tone RU, etc. For example, 26-RU may be represented as 26-tone RU.

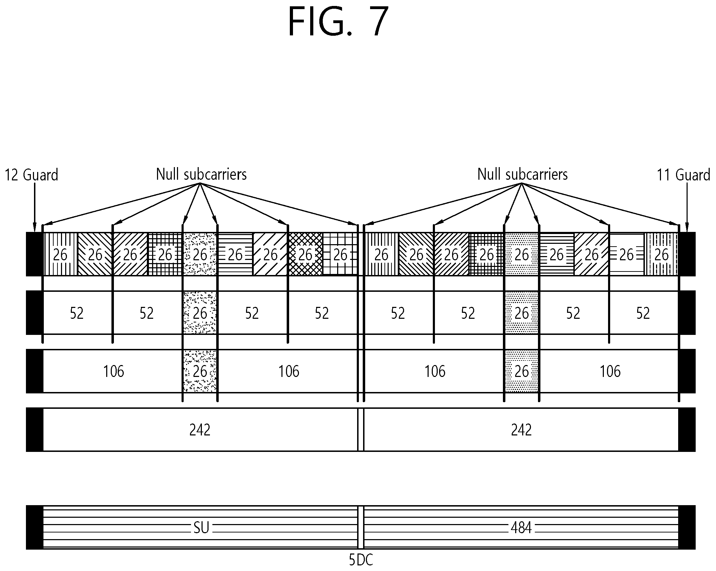

FIG. 7 is a diagram illustrating the layout of resource units (RUs) used for 40MHz PPDU.

Similarly to FIG. 6 in which RUs having various sizes are used, a 26-RU, a 52-RU, a 106-RU, a 242-RU, a 484-RU, and the like may be used in an example of FIG. 7. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 7, when the layout of the RUs is used for a single user, a 484-RU may be used. The specific number of RUs may be changed similarly to FIG. 6.

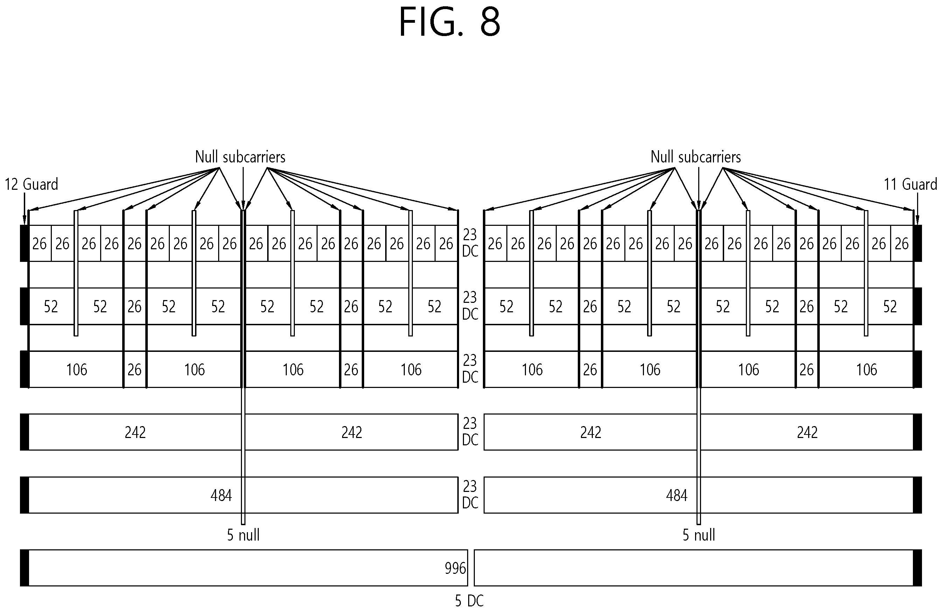

FIG. 8 is a diagram illustrating the layout of resource units (RUs) used for an 80MHz PPDU. The layout of resource units (RUs) used in this specification may vary. For example, the layout of resource units (RUs) used in the 80MHz band may vary.

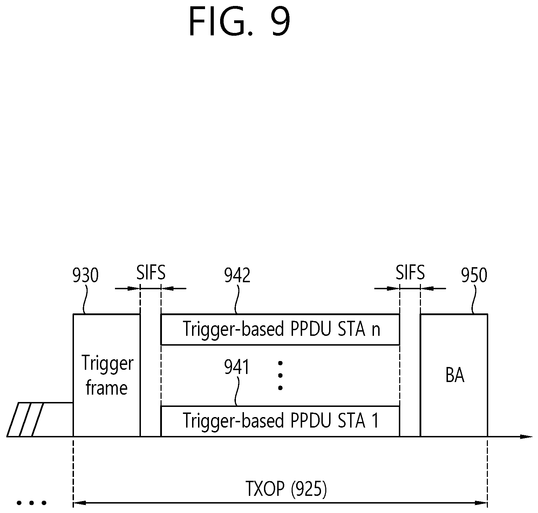

FIG. 9 shows an operation related to UL-MU. As illustrated, a transmitting STA (e.g., AP) can perform channel access through contending (i.e., backoff operation) and transmit a trigger frame (930). That is, the transmitting STA (e.g., AP) can transmit a PPDU including a trigger frame (930). When a PPDU including a trigger frame is received, a TB (trigger-based) PPDU is transmitted after a delay of SIFS.

TB PPDUs (941, 942) are transmitted at the same time and can be transmitted from multiple STAs (e.g., User STAs) whose AIDs are indicated in the Trigger frame (930). The ACK frame (950) for the TB PPDU can be implemented in various forms.

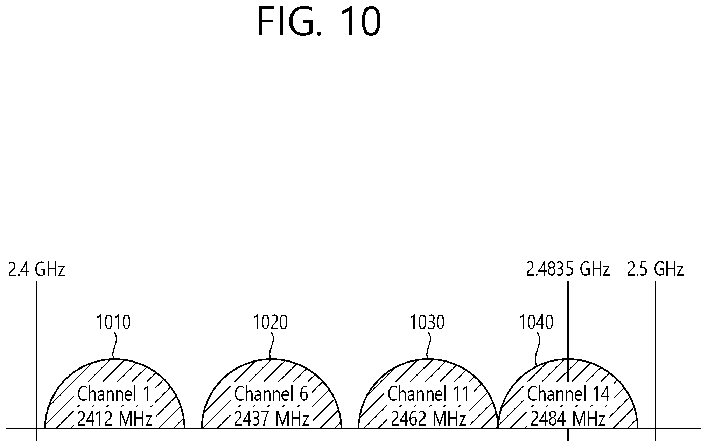

FIG. 10 illustrates an example of channels used/supported/defined within the 2.4 GHz band.

The 2.4 GHz band may also be referred to by other names, such as "first band." Furthermore, the 2.4 GHz band may refer to a frequency range in which channels with center frequencies adjacent to 2.4 GHz (e.g., channels with center frequencies between 2.4 and 2.5 GHz) are used/supported/defined.

The 2.4 GHz band may include multiple 20 MHz channels. The 20 MHz within the 2.4 GHz band may have multiple channel indices (e.g., indices 1 through 14). For example, the center frequency of a 20 MHz channel assigned channel index 1 may be 2.412 GHz, the center frequency of a 20 MHz channel assigned channel index 2 may be 2.417 GHz, and the center frequency of a 20 MHz channel assigned channel index N may be (2.407 + 0.005*N) GHz. The channel indices may be referred to by various names, such as channel numbers. The specific numerical values of the channel indices and center frequencies may change.

FIG. 10 exemplarily illustrates four channels within the 2.4 GHz band. The illustrated first frequency region (1010) to fourth frequency region (1040) may each include one channel. For example, the first frequency region (1010) may include channel 1 (a 20 MHz channel having an index of 1). In this case, the center frequency of channel 1 may be set to 2412 MHz. The second frequency region (1020) may include channel 6. In this case, the center frequency of channel 6 may be set to 2437 MHz. The third frequency region (1030) may include channel 11. In this case, the center frequency of channel 11 may be set to 2462 MHz. The fourth frequency region (1040) may include channel 14. In this case, the center frequency of channel 14 may be set to 2484 MHz.

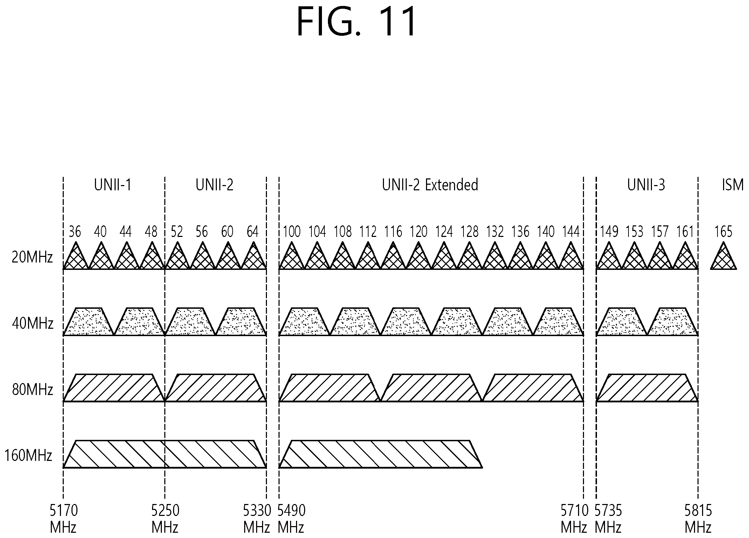

FIG. 11 illustrates an example of channels used/supported/defined within the 5 GHz band.

The 5 GHz band may be referred to by other names, such as a second band/band, etc. The 5 GHz band may refer to a frequency range in which channels with center frequencies greater than or equal to 5 GHz and less than 6 GHz (or less than 5.9 GHz) are used/supported/defined. Alternatively, the 5 GHz band may include multiple channels between 4.5 GHz and 5.5 GHz. The specific figures shown in FIG. 11 are subject to change.

Multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2Extended. UNII-3 may be referred to as UNII-Upper.

Within the 5 GHz band, multiple channels can be configured, and the bandwidth of each channel can be variously configured, such as 20 MHz, 40 MHz, 80 MHz, or 160 MHz. For example, the 5170 MHz to 5330 MHz frequency domain/range within UNII-1 and UNII-2 can be divided into eight 20 MHz channels. The 5170 MHz to 5330 MHz frequency domain/range can be divided into four channels through a 40 MHz frequency domain. The 5170 MHz to 5330 MHz frequency domain/range can be divided into two channels through an 80 MHz frequency domain. Alternatively, the 5170 MHz to 5330 MHz frequency domain/range can be divided into one channel through a 160 MHz frequency domain.

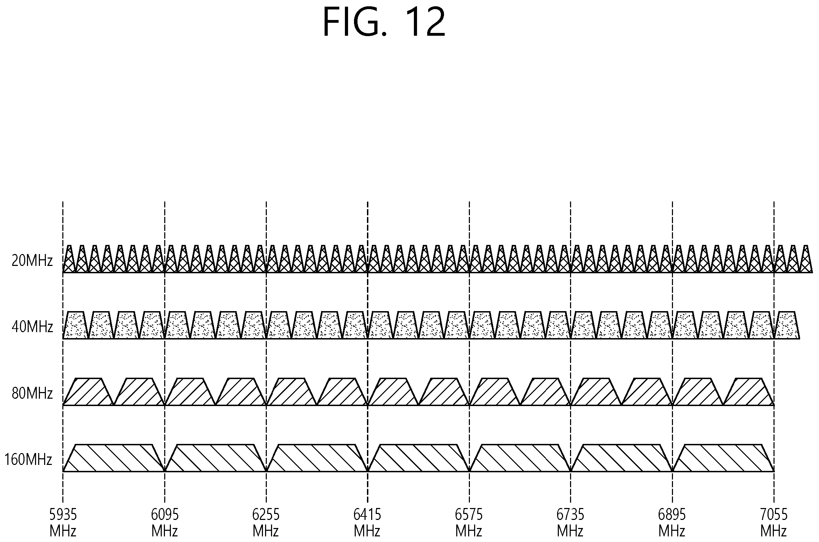

FIG. 12 illustrates an example of channels used/supported/defined within the 6 GHz band.

The 6 GHz band may be referred to by other names, such as the third band/band. The 6 GHz band may refer to a frequency range where channels with center frequencies higher than 5.9 GHz are used, supported, and defined. The specific values shown in FIG. 12 are subject to change.

For example, the 20 MHz channel in FIG. 12 may be defined starting from 5.940 GHz. Specifically, the leftmost channel among the 20 MHz channels in FIG. 12 may have an index of 1 (or channel index, channel number, etc.) and be assigned a center frequency of 5.945 GHz. In other words, the center frequency of channel index N may be determined as (5.940 + 0.005*N) GHz.

Accordingly, the indexes (or channel numbers) of the 20 MHz channels of FIG. 12 may be 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, 197, 201, 205, 209, 213, 217, 221, 225, 229, 233. Also, according to the (5.940 + 0.005*N) GHz rule mentioned above, the indexes of the 40 MHz channels in FIG. 12 may be 3, 11, 19, 27, 35, 43, 51, 59, 67, 75, 83, 91, 99, 107, 115, 123, 131, 139, 147, 155, 163, 171, 179, 187, 195, 203, 211, 219, 227.

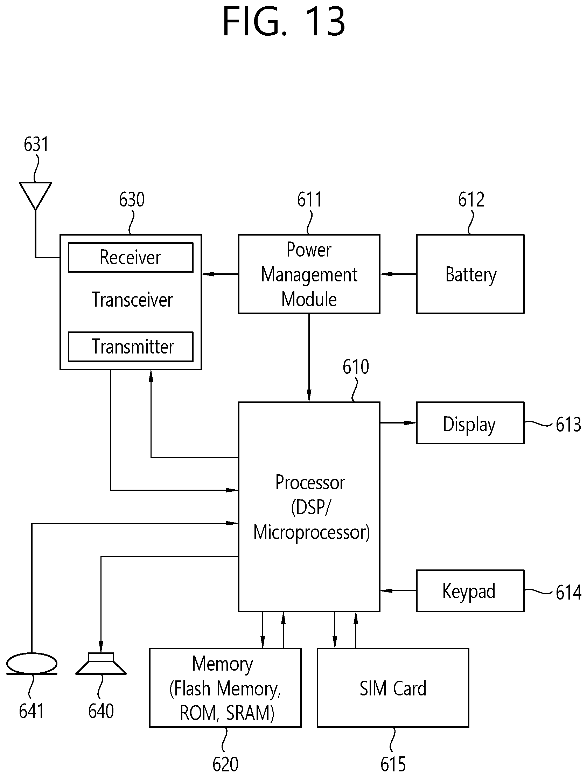

FIG. 13 shows a modified example of a transmitting device and/or a receiving device of the present disclosure.

The devices (e.g., AP STA, non-AP STA) shown in FIGS. 1 to 4 can be modified as shown in FIG. 13. The transceiver 630 of FIG. 13 can be identical to the transceiver 113, 123 of FIG. 1. The transceiver 630 of FIG. 13 can include a receiver and a transmitter.

The processor 610 of FIG. 13 can be identical to the processor 111, 121 of FIG. 1. Alternatively, the processor 610 of FIG. 13 can be identical to the processing chip 114, 124 of FIG. 1.

**EP 4 753 358 A1**

The memory 150 of FIG. 13 may be the same as the memory 112, 122 of FIG. 1. Alternatively, the memory 150 of FIG. 13 may be a separate external memory different from the memory 112, 122 of FIG. 1.

Referring to FIG. 13, the power management module 611 manages power for the processor 610 and/or the transceiver 630. The battery 612 supplies power to the power management module 611. The display 613 outputs the result processed by the processor 610. The keypad 614 receives input to be used by the processor 610. The keypad 614 may be displayed on the display 613. The SIM card 615 may be an integrated circuit used to securely store an international mobile subscriber identity (IMSI) and its associated keys, which are used to identify and authenticate subscribers in mobile devices such as mobile phones and computers.

Referring to FIG. 13, the speaker (640) may output sound-related results processed by the processor 610. The microphone (641) may receive sound-related input to be used by the processor 610.

Below, the Multi-AP operation applied to this specification is described.

The Multi-AP operation refers to a communication technique involving multiple APs in a WLAN. For example, the Multi-AP operation may refer to an operation in which one or more APs transmit and receive information to one or more STAs. In contrast to the Multi-AP operation, existing techniques may be expressed using various terms, such as STX (Single Transmission). For example, the STX operation may refer to a method in which one BSS AP communicates with one BSS STA. When communication is performed based on the STX operation, interference with adjacent APs (e.g., APs located in an overlapping BSS) may occur. This interference may result in reduced transmission and reception performance for cell-edge users (e.g., non-AP STAs located at the edge of the BSS).

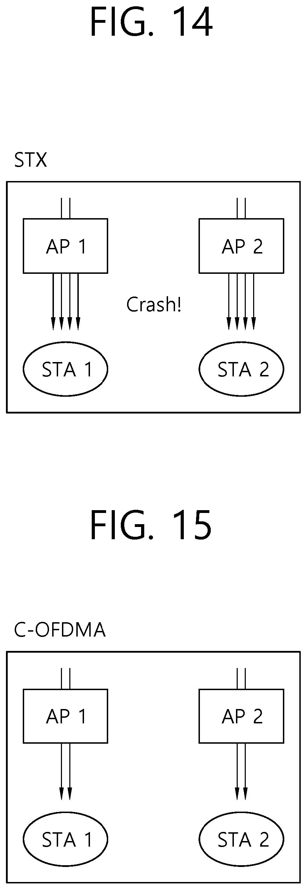

FIG. 14 illustrates operation according to a conventional STX operation. As shown, adjacent AP1 and AP2 can cause interference between STAs and APs.

To improve the STX operation, a new multi-AP operation is proposed. This multi-AP operation can be based on a technology that reduces various interferences, such as inter-symbol interference (ISI), through coordination with neighboring APs (e.g., APs located in an overlapping BSS).

In FIG. 14, STA1 and AP1 may be included in a BSS, and STA2 and AP2 may be included in an OBSS (Overlapping Basic Service Set). That is, STA2 may be an unassociated STA to AP1, and STA1 may be an unassociated STA to AP2.

For example, the Multi-AP operation can be classified into various technologies/types/formats/protocols, etc. For example, the Multi-AP operation can include Coordinated TDMA (C-TDMA) that distinguishes wireless resources allocated to multiple APs based on a time axis (time domain). Additionally or alternatively, the Multi-AP operation can include Coordinated OFDMA (C-OFDMA) that distinguishes wireless resources allocated to multiple APs based on a frequency axis (time domain). Additionally or alternatively, the Multi-AP operation can include Coordinated Spatial Reuse (C-SR) that applies Spatial Reuse (SR) to at least one AP. Additionally or alternatively, the Multi-AP operation can include Coordinated beamforming (CBF)/nulling that nulls and transmits interference generated from neighbors (e.g., adjacent APs/STAs, and/or OBSS APs/OBSS STAs). Additionally or alternatively, the Multi-AP operation may include AP selection in which an AP with a good channel condition among neighboring APs (e.g., at least one AP located within a BSS or OBSS and with a good channel condition) transmits. Additionally or alternatively, the Multi-AP operation may include Joint Transmission (JTX) or JT in which multiple APs (e.g., multiple APs included in the same BSS/OBSS, or multiple APs included in different BSS/OBSS) cooperate to perform simultaneous transmission and reception, and JTX/JT may be implemented based on Joint Beamforming or Joint MU-MIMO.

FIG. 15 illustrates an example of Coordinated OFDMA (C-OFDMA). The illustrated AP 1 can transmit a PPDU/signal to STA1, and AP2 can transmit a PPDU/signal to STA2. The transmission from AP1 and the transmission from AP2 can be performed in the same/overlapping time interval. The transmission from AP1 to STA1 can be performed based on a first frequency band, and the transmission from AP2 to STA2 can be performed based on a second frequency band different from the second frequency band. For example, in FIG. 15, STA1 and AP1 can be included in a BSS, and STA2 and AP2 can be included in an OBSS. That is, STA2 can be an unassociated STA to AP1, and STA1 can be an unassociated STA to AP2.

Although not illustrated in FIG. 15, an example of Coordinated TDMA (C-TDMA) is also possible. For example, the acquired TXOP can be divided into specific time units (e.g., slots), and the divided slots can be sequentially assigned to multiple different APs.

The above-described C-OFDMA example can be further modified as follows. For example, an AP (e.g., AP1) that has acquired a TXOP can share frequency resources with at least one neighboring AP (e.g., AP2 in the BSS/OBSS). For example, shared frequency resources can be defined on a resource unit (RU) basis or a subchannel basis. For example, for flexibility, frequency resources can be shared from AP1 to AP2 in 20/40/80 MHz subchannels or 242/484/996-tone RU units.

AP1, performing C-OFDMA, can act as a sharing AP or a master AP. That is, AP1 can request at least one neighboring AP (e.g., AP2 in the BSS/OBSS) to report information about the channel and/or buffer status. Based on this, AP1 can obtain a TXOP and share a part of the frequency resource (e.g., a 20 MHz subchannel or a RU of a certain size) with at least one AP in the vicinity (e.g., AP2 existing in the BSS/OBSS) within all or part of the time interval related to the TXOP.

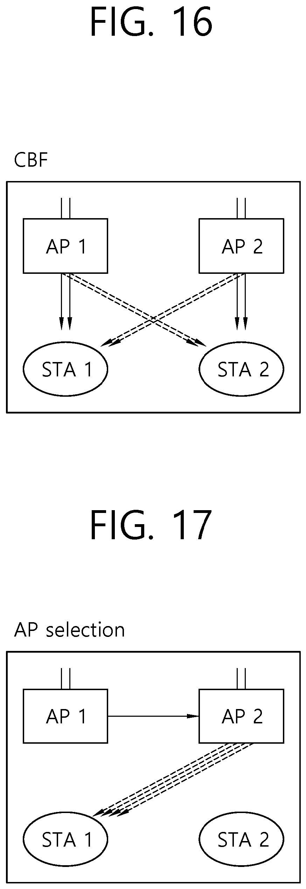

FIG. 16 illustrates an example of Coordinated Beamforming (CBF). The illustrated AP1 may transmit a PPDU/signal to STA1, and AP2 may transmit a PPDU/signal to STA2. The transmission from AP1 and the transmission from AP2 may be performed in the same/overlapping time interval. The transmission from AP1 and the transmission from AP2 may be performed through the same/overlapping frequency band. In order to reduce interference caused to STA2 by AP1, AP1 may perform nulling/beamforming toward STA2, and in order to reduce interference caused to STA1 by AP2, AP2 may perform nulling/beamforming toward STA1. For example, such nulling/beamforming may be implemented in a manner of positioning a radiation null to a neighboring unassociated STA. The above-described nulling/beamforming may make a specific AP invisible to a neighboring unassociated STA. For example, the above-described nulling/beamforming may make AP1 (or AP2) invisible to STA2 (or STA1).

For example, in FIG. 16, STA1 and AP1 may be included in the BSS, while STA2 and AP2 may be included in the OBSS. In other words, STA2 may be an unassociated STA to AP1, and STA1 may be an unassociated STA to AP2.

Although not illustrated in FIG. 16, control signals (e.g., coordination frames) for nulling/beamforming between AP1 and STA2 and/or nulling/beamforming between AP2 and STA1 may be transmitted and received over the backhaul link between AP1 and AP2.

FIG. 17 illustrates an example ofAP selection. The illustratedAP2 is judged to have a better channel condition than AP1. AP1 transmits its data/signal to AP2 via a backhaul link, and AP2 can transmit a signal to STA1 instead of AP1. For example, in FIG. 17, STA1 and AP1 may be included in a BSS, and STA2 and AP2 may be included in an OBSS. In other words, STA2 may be an unassociated STA to AP1, and STA1 may be an unassociated STA to AP2.

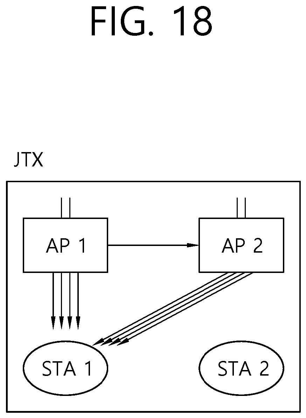

FIG. 18 illustrates an example of JTX/JT. The illustrated AP1 can transmit to STA1 together with AP2. For example, the PPDU/signal transmitted from AP2 to STA1 may be all or part of the same as the PPDU/signal transmitted from AP1 to STA1. For example, the PPDU/signal transmitted from AP2 to STA1 may be simultaneously transmitted through the same/overlapping frequency band as the PPDU/signal transmitted from AP1 to STA1. For example, the PPDU/signal transmitted from AP2 to STA1 may be a signal transmitted from AP1 through a backhaul link. For example, in FIG. 18, STA1 and AP1 may be included in a BSS, and STA2 and AP2 may be included in an OBSS. That is, STA2 may be an unassociated STA to AP1, and STA1 may be an unassociated STA to AP2.

More specifically, in FIG. 18, AP1 can transmit a coordination request (or can be named variously, such as a first request, a control request, etc.) to AP2 and receive a coordination response (or can be named variously, such as a first response, a control response, etc.) from AP2. Through the exchange of the request/response, information about coordination between AP1 and AP2 (e.g., information about whether AP1 and AP2 will perform simultaneous transmission to STA1), information about the point in time when coordination starts, information about the point in time when AP1 and AP2 start simultaneous transmission to STA1, information about data shared between AP1 and AP2, etc. can be exchanged. AP1 can share its data with AP2 via the backhaul link. Thereafter, AP1 can transmit a coordination trigger frame (or can be named variously, such as a trigger frame) to AP2 and perform simultaneous transmission to STA1 based on the trigger frame.

### <Embodiments applicable to this specification>

To enable terminals to maintain continuous WLAN connectivity over a wider area, numerous APs are being installed adjacent to each other. However, overlapping BSSs of multiple APs can lead to issues such as radio interference and transmission collisions between APs. To address these issues, various technologies have been proposed to coordinate APs across frequency, time, and spatial domains (e.g., RU selection, joint transmission, nulling, etc.). Furthermore, attention should be paid to the various issues that may arise during inter-AP coordination.

In EHT (802.11be), a technology was proposed to allocate some time within the TXOP acquired by the AP to support peer-to-peer (P2P) transmission to non-AP STAs. To this end, a new TXOP Sharing Mode subfield was defined in the Common Info field of the existing MU-RTS Trigger frame, and the MU-RTS (Multi User-Request To Send) Trigger frame when this value is nonzero is referred to as an MU-RTS TXOP Sharing (TXS) Trigger frame (TF). If the value of the TXOP Sharing mode is 1, the non-AP STA supports one or more (non-TB) PPDU transmissions to the AP, and if the value of the TXOP Sharing mode is 2, the non-AP STA supports P2P transmission in addition to (non-TB) PPDU transmissions to the AP.

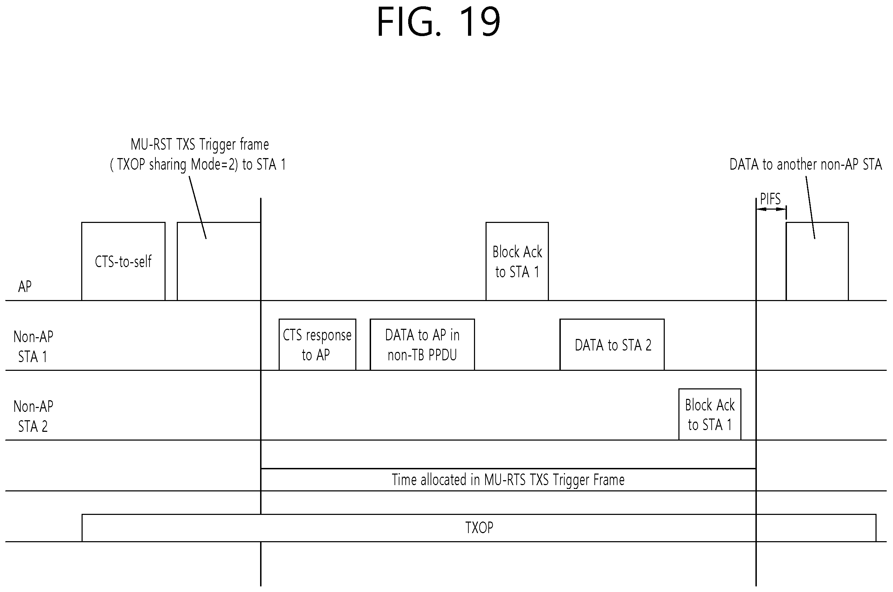

FIG. 19 illustrates an example of an operation of an MU-RTS TXS trigger frame based on a value of a TXOP Sharing Mode subfield being 2.

FIG. 19 illustrates an example of an operation based on a TXOP Sharing mode value being 2. Based on an AP transmitting an MU-RTS TXS TF including time allocation information (Time allocated in MU-RTS TXS Trigger Frame in FIG. 19) to a non-AP STA 1, the non-AP STA 1 may perform a P2P transmission to a non-AP STA 2 after responding with a Clear-To-Send (CTS).

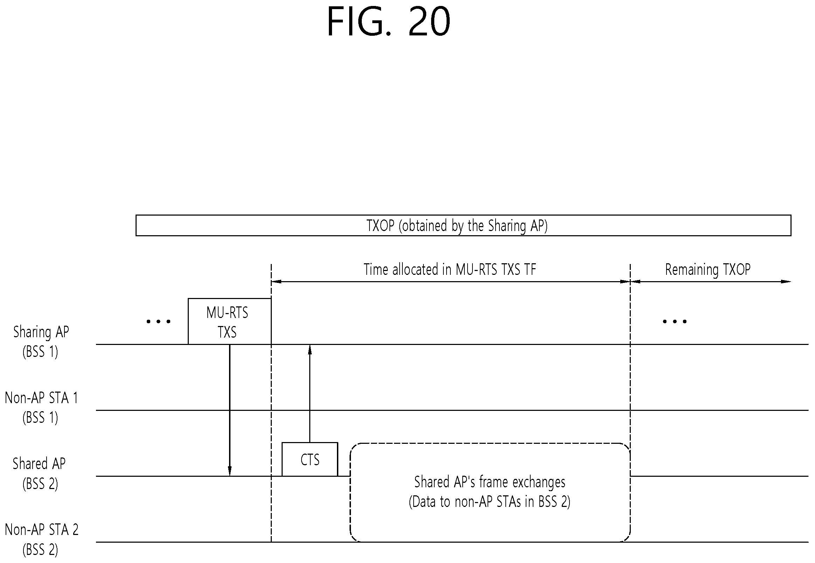

FIG. 20 illustrates an example of a coordinated TDMA operation.

Meanwhile, based on utilizing a conventional Triggered TXOP Sharing protocol for Multi-AP coordination, frame exchange may be performed without affecting each other by distinguishing transmissions within a BSS of each coordinated AP in units of time. For example, FIG. 20 illustrates an example of Coordinated-Time Division Multiplexing Access (C-TDMA) according to a time unit among coordination methods between coordinated APs. At this time, an AP in the conventional Triggered TXS protocol plays a role of an AP sharing a TXOP in a Multi-AP coordination operation, and an STA in the conventional Triggered TXS protocol may play a role of an AP with which the TXOP is shared in the Multi-AP coordination operation. In the present disclosure, an AP sharing a TXOP is referred to as a Sharing AP (SAP), and an AP provided with the TXOP from the SAP is referred to as a Shared AP (DAP). Here, the SAP sharing the TXOP is not limited only to an AP STA and may include a non-AP STA sharing the TXOP. In addition, the DAP with which the TXOP is shared is not limited only to an AP STA and may include a non-AP STA with which the TXOP is shared (or which performs transmission and reception with an AP STA with which the TXOP is shared). Also, a frame exchange between the DAP and a non-AP STA belonging to a DAP BSS or the SAP during a time allocated to the DAP is referred to as a BSS frame exchange (FE) of the DAP. For example, RTS/CTS frame exchange between the DAP and a non-AP STA followed by data frame transmission and block ACK frame response, UL data frame transmission of non-AP STAs for a trigger frame delivered from the DAP or data frame transmission of the DAP for a trigger frame delivered from the SAP may be performed as a frame exchange.

### 1. Problem

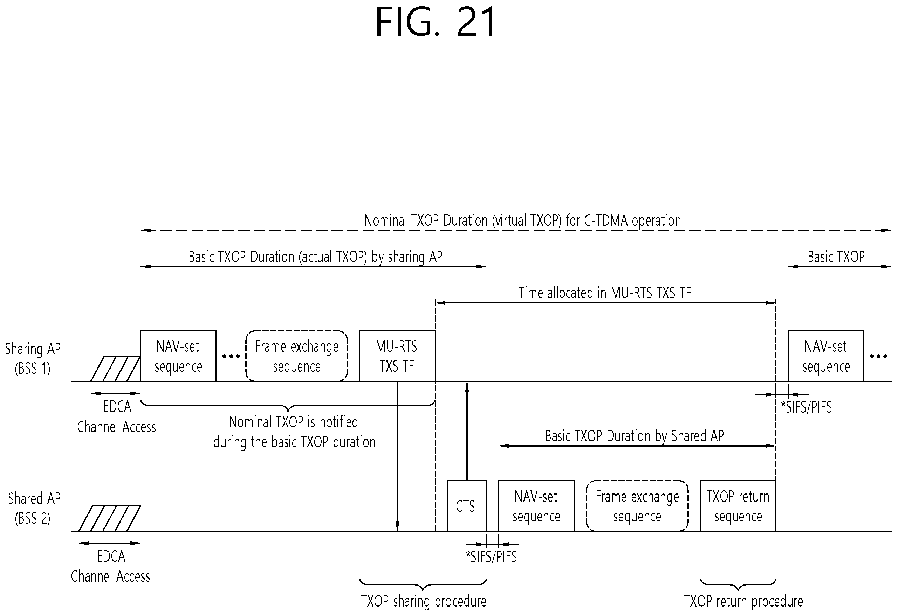

FIG. 21 illustrates an example of a C-TDMA operation based on using Two TXOPs.

A C-TDMA procedure in which a TXOP duration is set to be short may be performed based on utilizing two TXOPs to prevent a protection issue in which non-AP STAs fail to transmit an UL PPDU/frame to a DAP. For example, DAP and some non-AP STAs within a BSS of the DAP may perform a frame exchange with the DAP without being affected by a NAV of a SAP based on a C-TDMA operation procedure as shown in FIG. 21. For example, based on receiving a Trigger frame in which a resource (e.g., Resource Unit (RU)) is allocated so that associated STAs of the DAP may transmit a PPDU/frame from the DAP, the associated STAs may transmit the PPDU/frame without the influence of the NAV that may be set due to the SAP or non-AP STA(s) connected to the SAP.

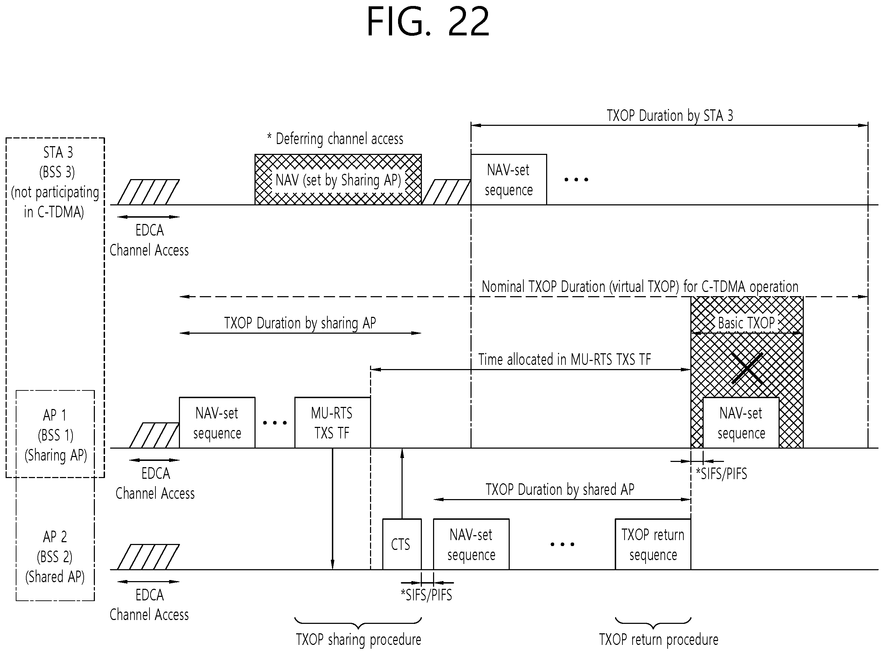

FIG. 22 illustrates an example of a TXOP return fail issue due to a Hidden node (STA 3).

However, as shown in FIG. 22, STA 3 (e.g., AP or non-AP STA) which is in a hidden node relationship with a DAP (i.e., AP 2) and does not participate in C-TDMA may determine that a medium is idle based on what value is set in a duration field of a MU-RTS TXS TF based on a duration (i.e., Time allocated in MU-RTS TXS TF or TXOP Duration by Shared AP) in which a SAP (i.e., AP 1) shared a TXOP with the DAP, and thus may occupy the medium used by the SAP based on performing channel access. In addition, a STA that fails to receive a response frame for the MU-RTS TXS TF may occupy the medium based on resetting a NAV based on a NAVTimeout duration expiring. For example, a problem may occur in which the SAP may not receive the TXOP return because STA 3 may occupy the medium even based on the DAP using a time allocated from the SAP and performing a TXOP return sequence.

Accordingly, the present disclosure proposes a medium reservation method for preventing a TXOP return fail issue that may occur in a C-TDMA procedure utilizing two TXOPs.

The SAP may be protected from the NAV to prevent a third party STA or OBSS STA (i.e., STA 3 of FIG. 22) from occupying the medium based on the medium reservation method proposed in the present disclosure. For example, the DAP may allow neighboring STAs of the SAP to set the NAV during a corresponding time based on performing a frame exchange for a NAV-set sequence with the SAP in a time allocated from the SAP. Alternatively, the SAP may perform protection based on transmitting an additional response frame in a TXOP sharing process. Specific designations (names) proposed in the present disclosure may be changed and are not limited.

### 2. Medium reservation method for preventing a TXOP return fail issue that may occur in a C-TDMA procedure

The present disclosure describes a medium reservation method for preventing a TXOP return fail issue that may occur in a C-TDMA procedure. Specifically, the DAP performing a NAV-set sequence process based on a time allocated through TXOP sharing from the SAP transmits a MU-RTS TXS TF or CTS-to-Self frame (or CTS frame) to the SAP, and the SAP responds with a CTS-to-Self frame (or CTS frame) for this, thereby causing neighboring STAs to set the NAV. Alternatively, the SAP may transmit an additional CTS-to-Self frame in the TXOP sharing process.

The medium reservation method for a C-TDMA procedure according to the present disclosure means that a TXOP return may be performed without medium occupation by neighboring STAs of the SAP based on the TXOP return occurring after the SAP shares the TXOP with the DAP. For example, the DAP being shared with the TXOP from the SAP may perform the NAV-set sequence through a prior frame exchange with the SAP to successfully return the TXOP after an individual FE. For example, neighboring STAs of the SAP receiving/sensing a frame exchange in a NAV-set sequence process between the DAP and the SAP may defer channel access based on updating or setting the NAV during a corresponding time. Alternatively, the SAP may perform protection based on transmitting an additional frame in the TXOP sharing process.

The medium reservation method in a C-TDMA procedure utilizing two TXOPs proposed in the present disclosure may operate as follows.

2.1 MU-RTS TXS TF & CTS frame exchange

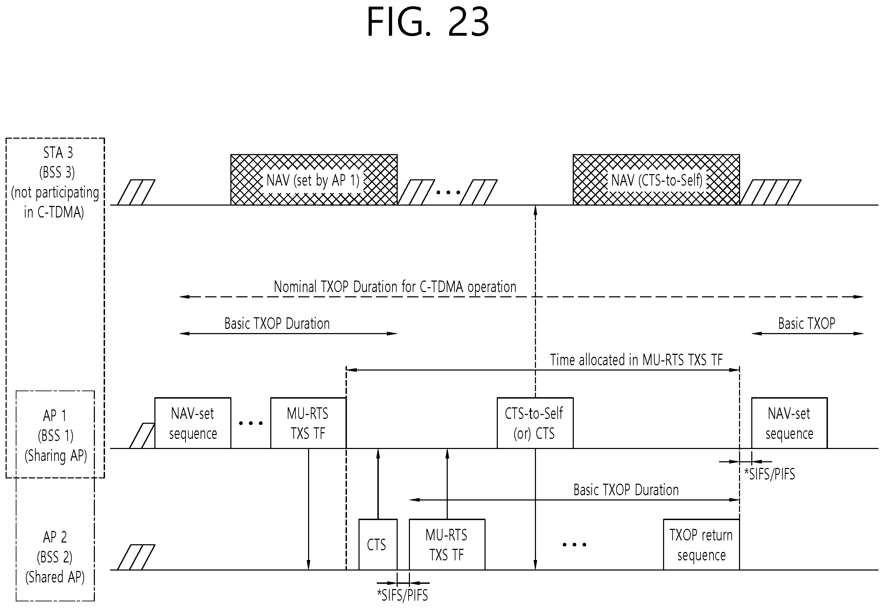

FIG. 23 illustrates a first embodiment of a medium reservation method for a TXOP return in a C-TDMA procedure.

FIG. 23 illustrates an example of a medium reservation method for a successful TXOP return in a C-TDMA procedure. First, APs participating in C-TDMA and third party STAs (e.g., meaning AP or non-AP STA, STA 3 of FIG. 23) perform medium contention to acquire a TXOP corresponding to a Basic TXOP Duration. An AP (i.e., AP 1) acting as a SAP based on acquiring the TXOP includes, in a Duration/ID field, a time required for a FE with STAs within its BSS and a time required for a TXOP sharing procedure (i.e., Basic TXOP Duration), rather than a Nominal TXOP Duration meaning an entire duration for a C-TDMA operation to be performed. For example, the SAP acquires the TXOP only for a duration corresponding to the Basic TXOP Duration based on a NAV-set sequence procedure and protects it with a NAV, and the SAP may perform the FE with the STAs within its BSS and the TXOP sharing procedure during this duration. Alternatively, the SAP may perform the TXOP sharing procedure based on performing the FE with the STAs within its BSS based on continuing frame transmission/reception at SIFS intervals without a separate NAV-set sequence procedure.

In addition, the SAP may transmit a Nominal TXOP Duration value to a coordinated AP(s) during the Basic TXOP Duration based on including it in a frame (e.g., MU-RTS TXS TF, CTS-to-Self, etc.) delivered in the NAV-set sequence or a frame delivered in a frame exchange sequence. At this time, the coordinated AP(s) include a DAP(s) scheduled to be shared with the TXOP according to scheduling of the SAP during the Nominal TXOP Duration and a DAP(s) that is not shared with the TXOP. Accordingly, the DAP(s) scheduled to be shared with the TXOP from the SAP within the Nominal TXOP Duration may recognize whether to share in advance based on the notified Nominal TXOP Duration information. In addition, the DAP(s) not scheduled to be shared with the TXOP from the SAP within the Nominal TXOP Duration may recognize that the SAP is scheduled to share the TXOP with another DAP(s) based on the notified Nominal TXOP Duration information. Subsequently, the SAP may perform an individual FE based on the frame exchange sequence procedure, and the SAP finishing the individual FE may start the initially scheduled TXOP sharing procedure based on transmitting a MU-RTS TXS TF (or Control frame).

A DAP following Rule 1) defined below may perform a NAV-set sequence procedure or an individual FE at SIFS/PIFS intervals following the TXOP sharing procedure of the SAP.

Rule 1) A DAP notified of the Nominal TXOP Duration based on a frame delivered from the SAP may respond with a CTS frame (or a response frame corresponding to the frame delivered from the SAP) based on receiving a MU-RTS TXS TF (i.e., a frame transmitted for the purpose of sharing a TXOP in a TXOP sharing procedure) delivered from the SAP, and may perform a NAV-set sequence procedure or an individual FE immediately after SIFS/PIFS. Alternatively, the DAP may perform the response to the MU-RTS TXS TF reception and the NAV-set sequence procedure integrally based on using a CTS-to-Self frame based on receiving the MU-RTS TXS TF delivered from the SAP. At this time, a start point of an allocated time assigned from the SAP may be assumed to be immediately after receiving the MU-RTS TXS TF, same as the existing Extremely High Throughput (EHT) TXS protocol.

In the present disclosure, to prevent a TXOP return fail issue due to medium contention of a third party STA not participating in C-TDMA, the NAV-set sequence procedure described above in Rule 1) is performed based on a frame exchange sequence with the SAP. First, as in Embodiment 1 of FIG. 23, a DAP may respond with a CTS frame (or a response frame corresponding to the frame delivered from the SAP) based on receiving a MU-RTS TXS TF (i.e., a frame transmitted for the purpose of sharing a TXOP in a TXOP sharing procedure) delivered from the SAP, and may transmit a MU-RTS TXS TF (i.e., a frame transmitted for the purpose of medium reservation and NAV setting) to the SAP for the NAV-set sequence procedure immediately after SIFS/PIFS.

The MU-RTS TXS TF at this time may be defined and indicated as a new mode (i.e., 3) to be used for a frame exchange for the NAV-set sequence in the time allocated to the DAP, or may be signaled based on utilizing reserved bits in a Common Info field or a User Info field. In addition, an Allocation duration field in an unused User Info field may be reserved.

The SAP receiving this responds with a CTS-to-Self frame (or CTS frame) to allow a neighboring STA (i.e., STA 3 of FIG. 23) to set a NAV based on the CTS-to-Self frame (or CTS frame). Accordingly, the SAP may also be protected from the NAV based on the CTS-to-Self frame (or CTS frame) during a time corresponding to the time allocated to the DAP by the SAP (i.e., Time allocated in MU-RTS TXS TF), and may perform a NAV-set sequence procedure or an individual FE after SIFS/PIFS according to Rule 3) defined below, following a TXOP return sequence procedure that may be performed by the DAP before the allocated time expires.

Rule 3) A SAP receiving a frame delivered from the DAP (i.e., a frame transmitted for the purpose of returning a TXOP in a TXOP return procedure) within the initially set Nominal TXOP Duration responds with a response frame corresponding to the frame delivered from the DAP, and may perform a NAV-set sequence procedure or an individual FE immediately after SIFS/PIFS. Alternatively, the SAP may integrate a response to the MU-RTS TXS TF reception and a NAV-set sequence procedure based on using a CTS-to-Self frame based on receiving a MU-RTS TXS TF (for a TXOP return procedure) delivered from the DAP. Alternatively, the SAP may perform a NAV-set sequence procedure or an individual FE immediately after SIFS/PIFS without transmitting a separate response frame based on receiving a frame aimed at a TXOP return (e.g., CF-End frame) delivered from the DAP.

2.2 CTS-to-Self frame (or CTS frame) & CTS-to-Self frame exchange

2.2.1 Embodiment 2

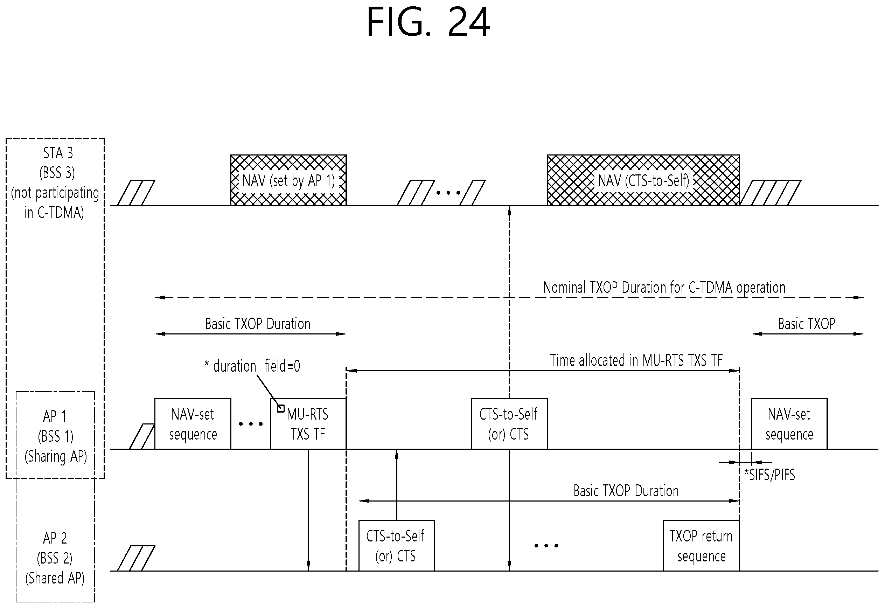

FIG. 24 illustrates a second embodiment of a medium reservation method for a TXOP return in a C-TDMA procedure.

In Embodiment 2 of FIG. 24, based on receiving a MU-RTS TXS TF (i.e., a frame transmitted for the purpose of sharing a TXOP in a TXOP sharing procedure) delivered from a SAP, a CTS-to-Self frame (or CTS frame) may be transmitted to immediately perform a reception response to the MU-RTS TXS TF and a NAV-set sequence.

The SAP receiving this responds with a CTS-to-Self frame (or CTS frame) to allow a neighboring STA (i.e., STA 3 of FIG. 24) to set a NAV based on the CTS-to-Self frame (or CTS frame). Accordingly, the SAP may also be protected from the NAV based on the CTS-to-Self frame (or CTS frame) during a time corresponding to the time allocated to the DAP by the SAP (i.e., Time allocated in MU-RTS TXS TF), and may perform a NAV-set sequence procedure or an individual FE after SIFS/PIFS according to Rule 3) defined below, following a TXOP return procedure that may be performed by the DAP before the allocated time expires.

Rule 3) A SAP receiving a frame delivered from the DAP (i.e., a frame transmitted for the purpose of returning a TXOP in a TXOP return procedure) within the initially set Nominal TXOP Duration responds with a response frame corresponding to the frame delivered from the DAP, and may perform a NAV-set sequence procedure or an individual FE immediately after SIFS/PIFS. Alternatively, the SAP may integrate a response to the MU-RTS TXS TF reception and a NAV-set sequence procedure based on using a CTS-to-Self frame based on receiving a MU-RTS TXS TF (for a TXOP return procedure) delivered from the DAP. Alternatively, the SAP may perform a NAV-set sequence procedure or an individual FE immediately after SIFS/PIFS without transmitting a separate response frame based on receiving a frame aimed at a TXOP return (e.g., CF-End frame) delivered from the DAP.

2.2.2 Embodiment 3

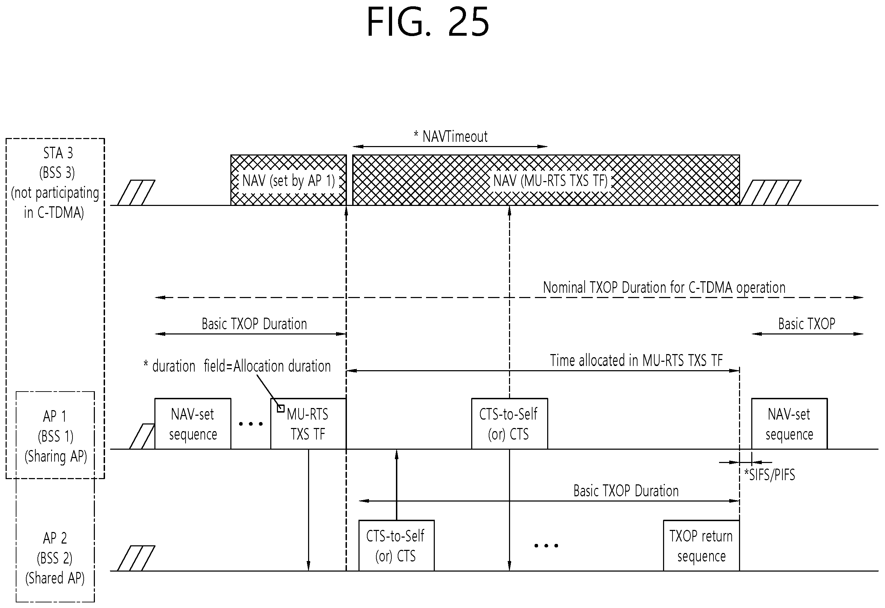

FIG. 25 illustrates a third embodiment of a medium reservation method for a TXOP return in a C-TDMA procedure.

In Embodiment 3 of FIG. 25, similar to Embodiment 2, a CTS-to-Self frame (or CTS frame) may be transmitted to respond based on receiving a MU-RTS TXS TF delivered from a SAP. In the present Embodiment 3, it is assumed that a duration field of the MU-RTS TXS TF transmitted by the SAP includes an allocation duration value, which is a time to be allocated to a DAP. STAs receiving the MU-RTS TXS TF including the allocation duration value in the duration field may update an existing NAV (for example, in the case of STA 3) or set a new NAV. The SAP receiving the CTS-to-Self frame (or CTS frame), which is a response frame to the MU-RTS TXS TF, may prevent a NAV timeout issue based on additionally responding with a CTS-to-Self frame (or CTS frame).

Specifically, a STA using information of the MU-RTS TXS TF to update the most recent NAV setting may be allowed to reset its NAV based on a PHY-RXEARLYSIG.indication or PHY-RXSTART.indication primitive not being received from a PHY during a NAVTimeout duration for the MU-RTS TXS TF received from AP 1. For example, since a specific STA in a hidden node relationship with AP 2 cannot hear the CTS frame for the MU-RTS TXS TF from AP 1, an issue may occur in which the medium is occupied based on resetting the NAV and performing a random backoff when the NAVTimeout expires.

Accordingly, a STA receiving the additionally transmitted CTS-to-Self frame (or CTS frame) from the SAP may update a NAVTimer before the NAVTimeout duration expires and defers channel access during a corresponding duration.

In addition to this, several methods may exist to prevent and supplement the NAVTimeout issue. This is based on a method of adding a new signaling bit in the MU-RTS TXS TF delivered by the SAP for TXOP sharing. Options described later cannot be applied to a legacy STA and may be interpreted only by a UHR or higher STA.

Option 1) A new signaling bit may indicate that the SAP is scheduled to transmit a CTS-to-Self frame (or CTS) within a certain time following the MU-RTS TXS TF transmission. An example of this is as follows.

-> More CTS (bit): Indicates that a CTS frame (or CTS-to-Self) is scheduled to be transmitted within a certain time. For example, EHT Reserved (7 bits) or Reserved (4 bits) of a Common Info field is utilized. Specifically, a new field is defined to indicate that a CTS frame (or CTS-to-Self) is scheduled to be transmitted based on utilizing 1 bit corresponding to the EHT Reserved or Reserved.

bit 0: Indicates that a CTS frame (or CTS-to-Self) is not scheduled to be transmitted following the transmission of the corresponding MU-RTS TXS TF.

bit 1: Indicates that a CTS frame (or CTS-to-Self) is scheduled to be transmitted following the transmission of the corresponding MU-RTS TXS TF.

Option 2) A new signaling bit may indicate a STA receiving the MU-RTS TXS TF not to reset the NAV even if a frame is not received until the NAVTimeout duration expires. An example of this is as follows.

-> NAVTimeout Disable (bit): Indicates not to reset the NAV even if the NAVTimeout duration expires. For example, EHT Reserved (7 bits) or Reserved (4 bits) of the Common Info field is utilized. Specifically, a new field is defined to indicate not to reset the NAV even if the NAVTimeout duration expires based on utilizing 1 bit corresponding to the EHT Reserved or Reserved.

bit 0: Indicates to reset the NAV based on the NAVTimeout duration expiring after receiving the corresponding MU-RTS TXS TF. (default)

bit 1: Indicates not to reset the NAV even based on the NAVTimeout duration expiring after receiving the corresponding MU-RTS TXS TF.

The SAP may also be protected during a time corresponding to the time allocated to the DAP through the CTS-to-Self frame (or CTS frame) additionally transmitted from the SAP, and may perform a NAV-set sequence procedure or an individual FE after SIFS/PIFS according to Rule 3) described above, following a TXOP return procedure that may be performed by the DAP before the allocated time expires.

2.2.3 Embodiment 4

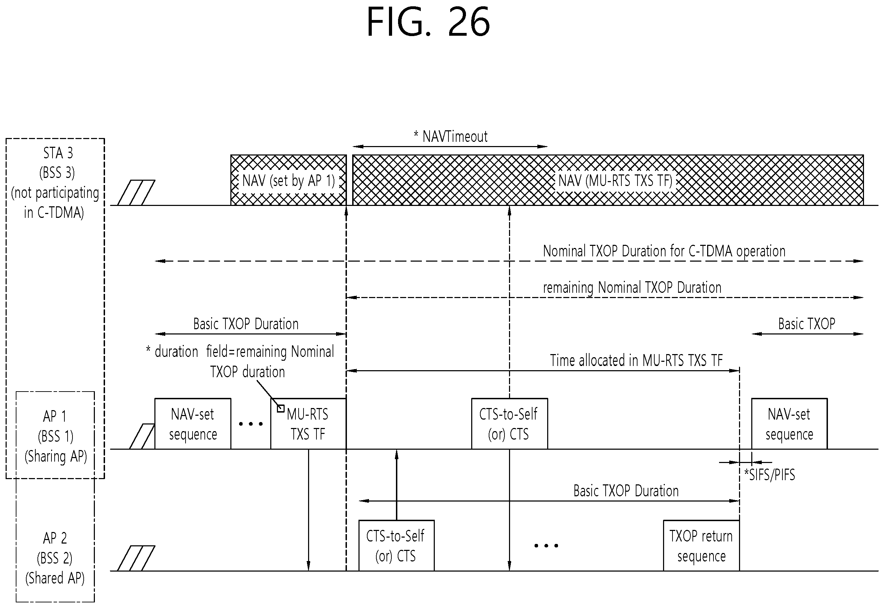

FIG. 26 illustrates a fourth embodiment of a medium reservation method for a TXOP return in a C-TDMA procedure.

In Embodiment 4 of FIG. 26, similar to Embodiment 2, a DAP may respond based on receiving a MU-RTS TXS TF delivered from a SAP based on transmitting a CTS-to-Self frame (or CTS frame). In the present Embodiment 4, it is assumed that a duration field of the MU-RTS TXS TF transmitted by the SAP includes a remaining Nominal TXOP Duration value (i.e., Nominal TXOP Duration - the first Basic TXOP Duration of the SAP) excluding the Basic TXOP Duration initially acquired by the SAP within the Nominal TXOP Duration for an entire C-TDMA operation. Based on performing an additional TXOP sharing to another DAP following a first TXOP sharing for AP 2 within the Nominal TXOP Duration (i.e., based on considering a Multiple DAPs support scenario), a duration value up to a scheduled TXOP sharing time for a subsequent DAP may be included.

STAs receiving the MU-RTS TXS TF including the remaining Nominal TXOP Duration value in the duration field may update an existing NAV (for example, in the case of STA 3) or set a new NAV. The SAP receiving the CTS-to-Self frame (or CTS frame), which is a response frame to the MU-RTS TXS TF, may prevent a NAV timeout issue based on additionally responding with a CTS-to-Self frame (or CTS frame).

Specifically, a STA using information of the MU-RTS TXS TF to update the most recent NAV setting may be allowed to reset its NAV based on a PHY-RXEARLYSIG.indication or PHY-RXSTART.indication primitive not being received from a PHY during a NAVTimeout duration for the MU-RTS TXS TF received from AP 1. For example, since a specific STA in a hidden node relationship with AP 2 cannot hear the CTS frame for the MU-RTS TXS TF from AP 1, an issue may occur in which the medium is occupied based on resetting the NAV and performing a random backoff based on the NAVTimeout expiring.

Accordingly, a STA receiving the additionally transmitted CTS-to-Self frame (or CTS frame) from the SAP may update a NAVTimer before the NAVTimeout duration expires and defers channel access during a corresponding duration.

In addition to this, several methods may exist to prevent and supplement the NAVTimeout issue. This is based on a method of adding a new signaling bit in the MU-RTS TXS TF delivered by the SAP for TXOP sharing.

Option 1) A new signaling bit may indicate that the SAP is scheduled to transmit a CTS-to-Self frame (or CTS) within a certain time following the MU-RTS TXS TF transmission. An example of this is as follows.

-> More CTS (bit): Indicates that a CTS frame (or CTS-to-Self) is scheduled to be transmitted within a certain time. For example, EHT Reserved (7 bits) or Reserved (4 bits) of a Common Info field is utilized. Specifically, a new field is defined to indicate that a CTS frame (or CTS-to-Self) is scheduled to be transmitted based on utilizing 1 bit corresponding to the EHT Reserved or Reserved.

bit 0: Indicates that a CTS frame (or CTS-to-Self) is not scheduled to be transmitted following the transmission of the corresponding MU-RTS TXS TF.

bit 1: Indicates that a CTS frame (or CTS-to-Self) is scheduled to be transmitted following the transmission of the corresponding MU-RTS TXS TF.

Option 2) A new signaling bit may indicate a STA receiving the MU-RTS TXS TF not to reset the NAV even if a frame is not received until the NAVTimeout duration expires. An example of this is as follows.

-> NAVTimeout Disable (bit): Indicates not to reset the NAV even if the NAVTimeout duration expires. For example, EHT Reserved (7 bits) or Reserved (4 bits) of the Common Info field is utilized. Specifically, a new field is defined to indicate not to reset the NAV even if the NAVTimeout duration expires based on utilizing 1 bit corresponding to the EHT Reserved or Reserved.

bit 0: Indicates to reset the NAV based on the NAVTimeout duration expiring after receiving the corresponding MU-RTS TXS TF. (default)

bit 1: Indicates not to reset the NAV even based on the NAVTimeout duration expiring after receiving the corresponding MU-RTS TXS TF.

The SAP may also be protected during a time corresponding to the time allocated to the DAP through the CTS-to-Self frame (or CTS frame) additionally transmitted from the SAP, and may perform an individual FE after SIFS/PIFS according to Rule 3) described above, following a TXOP return procedure that may be performed by the DAP before the allocated time expires.

2.2.4 Embodiment 5

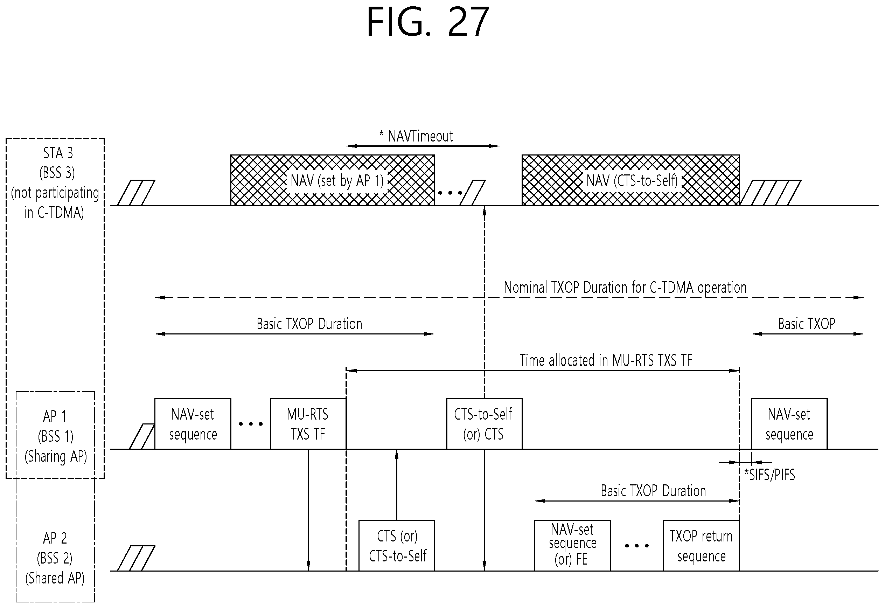

FIG. 27 illustrates a fifth embodiment of a medium reservation method for a TXOP return in a C-TDMA procedure.

In Embodiment 5 of FIG. 27, similar to Embodiment 2, a DAP may respond based on receiving a MU-RTS TXS TF delivered from a SAP based on transmitting a CTS (or CTS-to-Self frame). In the present Embodiment 5, it is assumed that a duration field of the MU-RTS TXS TF transmitted by the SAP includes a time required to receive a CTS frame (or CTS-to-Self frame) transmitted from the DAP. Some STAs receiving the MU-RTS TXS TF may update an existing NAV or set a new NAV. The SAP receiving the CTS frame (or CTS-to-Self frame), which is a response frame to the MU-RTS TXS TF, may additionally respond with a CTS-to-Self frame (or CTS frame). A value corresponding to an allocation duration allocated to the DAP may be included in a duration field of the CTS-to-Self frame (or CTS frame) transmitted by the SAP, and a NAV timeout issue may be prevented based on transmission of the CTS-to-Self frame (or CTS frame) from the SAP.

Specifically, the following values may be included in the duration field based on a start point of a time allocated to the DAP by the SAP.

The duration field of the CTS-to-Self frame (or CTS frame) transmitted by the SAP may be configured as follows (*excluding the PPDU length of a corresponding frame);

i) Based on assuming that the allocated time starts immediately after transmitting the MU-RTS TXS TF:

$$\text{duration field} = \{(\text{Allocation duration}) - (2{\times}\text{SIFS}) - (\text{CTS\_Time})\}$$

ii) Based on assuming that the allocated time starts immediately after receiving the CTS frame (or CTS-to-Self frame) from the DAP:

$$\text{duration field} = \{(\text{Allocation duration}) - (\text{SIFS})\}$$

iii) Based on assuming that the allocated time starts based on the SAP transmitting the CTS-to-Self frame (or CTS frame): duration field = Allocation duration

The duration field of a frame for a NAV-set sequence transmitted by the DAP may be configured as follows (*excluding the PPDU length of a corresponding frame);

i) Based on assuming that the allocated time starts immediately after receiving the MU-RTS TXS TF:

$$\text{duration field} = \{(\text{Allocation duration}) - (3{\times}\text{SIFS}) - (2{\times}\text{CTS\_Time})\}$$

ii) Based on assuming that the allocated time starts immediately after the DAP transmits the CTS frame (or CTS-to-Self frame):

$$\text{duration field} = \{(\text{Allocation duration}) - (2\times\text{SIFS}) - (\text{CTS\_Time})\}$$

iii) Based on assuming that the allocated time starts immediately after receiving the CTS-to-Self frame (or CTS frame) from the SAP:

duration field = {(Allocation duration} - (SIFS)}

Specifically, a STA using information of the MU-RTS TXS TF to update the most recent NAV setting may be allowed to reset its NAV based on a PHY-RXEARLYSIG.indication or PHY-RXSTART.indication primitive not being received from a PHY during a NAVTimeout duration for the MU-RTS TXS TF received from AP 1. For example, since a specific STA in a hidden node relationship with AP 2 cannot hear the CTS frame for the MU-RTS TXS TF from AP 1, an issue may occur in which the medium is occupied based on resetting the NAV and performing a random backoff based on the NAVTimeout expiring.

Accordingly, a STA receiving the additionally transmitted CTS-to-Self frame (or CTS frame) from the SAP may update a NAVTimer before the NAVTimeout duration expires and defers channel access during a corresponding duration.

In addition to this, several methods may exist to prevent and supplement the NAVTimeout issue. This is based on a method of adding a new signaling bit in the MU-RTS TXS TF delivered by the SAP for TXOP sharing.

Option 1) A new signaling bit may indicate that the SAP is scheduled to transmit a CTS-to-Self frame (or CTS) within a certain time following the MU-RTS TXS TF transmission. An example of this is as follows.

-> More CTS (bit): Indicates that a CTS frame (or CTS-to-Self) is scheduled to be transmitted within a certain time. For example, EHT Reserved (7 bits) or Reserved (4 bits) of a Common Info field is utilized. Specifically, a new field is defined to indicate that a CTS frame (or CTS-to-Self) is scheduled to be transmitted based on utilizing 1 bit corresponding to the EHT Reserved or Reserved.

bit 0: Indicates that a CTS frame (or CTS-to-Self) is not scheduled to be transmitted following the transmission of the corresponding MU-RTS TXS TF.

bit 1: Indicates that a CTS frame (or CTS-to-Self) is scheduled to be transmitted following the transmission of the corresponding MU-RTS TXS TF.

Option 2) A new signaling bit may indicate a STA receiving the MU-RTS TXS TF not to reset the NAV even if a frame is not received until the NAVTimeout duration expires. An example of this is as follows.

-> NAVTimeout Disable (bit): Indicates not to reset the NAV even if the NAVTimeout duration expires. For example, EHT Reserved (7 bits) or Reserved (4 bits) of the Common Info field is utilized. Specifically, a new field is defined to indicate not to reset the NAV even if the NAVTimeout duration expires based on utilizing 1 bit corresponding to the EHT Reserved or Reserved.

bit 0: Indicates to reset the NAV based on the NAVTimeout duration expiring after receiving the corresponding MU-RTS TXS TF. (default)

bit 1: Indicates not to reset the NAV even based on the NAVTimeout duration expiring after receiving the corresponding MU-RTS TXS TF.

The SAP may also be protected during a time corresponding to the time allocated to the DAP through the CTS-to-Self frame (or CTS frame) additionally transmitted from the SAP, and may perform a NAV-set sequence procedure or an individual FE after SIFS/PIFS according to Rule 3) described above, following a TXOP return procedure that may be performed by the DAP before the allocated time expires.

2.2.5 Embodiment 6

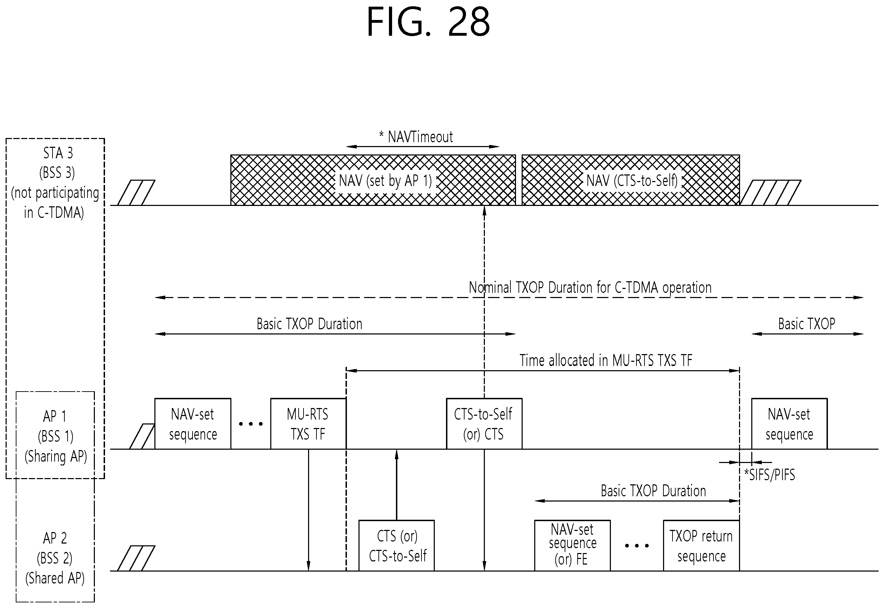

FIG. 28 illustrates a sixth embodiment of a medium reservation method for a TXOP return in a C-TDMA procedure.

In Embodiment 6 of FIG. 28, similar to Embodiment 2, a DAP may respond based on receiving a MU-RTS TXS TF delivered from a SAP based on transmitting a CTS frame (or CTS-to-Self frame). In the present Embodiment 6, it is assumed that a duration field of the MU-RTS TXS TF transmitted by the SAP includes a time required to transmit an additional CTS-to-Self frame (or CTS frame) after receiving the CTS frame (or CTS-to-Self frame). Some STAs receiving the MU-RTS TXS TF may update an existing NAV or set a new NAV. The SAP receiving the CTS frame (or CTS-to-Self frame), which is a response frame to the MU-RTS TXS TF, may additionally respond with a CTS-to-Self frame (or CTS frame). A value corresponding to an allocation duration allocated to the DAP may be included in a duration field of the corresponding CTS-to-Self frame (or CTS frame), and a NAV timeout issue may be prevented based on transmission of the CTS-to-Self frame (or CTS frame) from the SAP.

Specifically, the following values may be included in the duration field based on a start point of a time allocated to the DAP by the SAP.

In terms of the SAP, the duration field of the CTS frame may be configured as follows (*excluding the PPDU length of the corresponding CTS frame);

The duration field of the CTS-to-Self frame (or CTS frame) transmitted by the SAP may be configured as follows (*excluding the PPDU length of the corresponding frame);

i) Based on assuming that the allocated time starts immediately after transmitting the MU-RTS TXS TF:

$$\text{duration field} = \{(\text{Allocation duration}) - (2 \times \text{SIFS}) - (\text{CTS\_Time})\}$$

ii) Based on assuming that the allocated time starts immediately after receiving the CTS frame (or CTS-to-Self frame) from the DAP:

$$\text{duration field} = \{(\text{Allocation duration}) - (\text{SIFS})\}$$

iii) Based on assuming that the allocated time starts based on the SAP transmitting the CTS-to-Self frame (or CTS frame):
duration field = Allocation duration

The duration field of a frame for a NAV-set sequence transmitted by the DAP may be configured as follows (*excluding the PPDU length of the corresponding frame);

i) Based on assuming that the allocated time starts immediately after receiving the MU-RTS TXS TF:

$$\text{duration field} = \{(\text{Allocation duration}) - (3 \times \text{SIFS}) - (2 \times \text{CTS\_Time})\}$$

ii) Based on assuming that the allocated time starts immediately after the DAP transmits the CTS frame (or CTS-to-Self frame):

$$\text{duration field} = \{(\text{Allocation duration}) - (2 \times \text{SIFS}) - (\text{CTS\_Time})\}$$

iii) Based on assuming that the allocated time starts immediately after receiving the CTS-to-Self frame (or CTS frame) from the SAP:

$$\text{duration field} = \{(\text{Allocation duration}\} - (\text{SIFS})\}$$

Specifically, a STA using information of the MU-RTS TXS TF to update the most recent NAV setting may be allowed to reset its NAV based on a PHY-RXEARLYSIG.indication or PHY-RXSTART.indication primitive not being received from a PHY during a NAVTimeout duration for the MU-RTS TXS TF received from AP 1. For example, since a specific STA in a hidden node relationship with AP 2 cannot hear the CTS frame for the MU-RTS TXS TF from AP 1, an issue may occur in which the medium is occupied based on resetting the NAV and performing a random backoff based on the NAVTimeout expiring.

Accordingly, a STA receiving the additionally transmitted CTS-to-Self frame (or CTS frame) from the SAP may update a NAVTimer before the NAVTimeout duration expires and defers channel access during a corresponding duration.

In addition to this, several methods may exist to prevent and supplement the NAVTimeout issue. This is based on a method of adding a new signaling bit in the MU-RTS TXS TF delivered by the SAP for TXOP sharing.

Option 1) A new signaling bit may indicate that the SAP is scheduled to transmit a CTS-to-Self frame (or CTS) within a certain time following the MU-RTS TXS TF transmission. An example of this is as follows.

-> More CTS (bit): Indicates that a CTS frame (or CTS-to-Self) is scheduled to be transmitted within a certain time. For example, EHT Reserved (7 bits) or Reserved (4 bits) of a Common Info field is utilized. Specifically, a new field is defined to indicate that a CTS frame (or CTS-to-Self) is scheduled to be transmitted based on utilizing 1 bit corresponding to the EHT Reserved or Reserved.

bit 0: Indicates that a CTS frame (or CTS-to-Self) is not scheduled to be transmitted following the transmission of the corresponding MU-RTS TXS TF.

bit 1: Indicates that a CTS frame (or CTS-to-Self) is scheduled to be transmitted following the transmission of the corresponding MU-RTS TXS TF.

Option 2) A new signaling bit may indicate a STA receiving the MU-RTS TXS TF not to reset the NAV even if a frame is not received until the NAVTimeout duration expires. An example of this is as follows.

-> NAVTimeout Disable (bit): Indicates not to reset the NAV even if the NAVTimeout duration expires. For example, EHT Reserved (7 bits) or Reserved (4 bits) of the Common Info field is utilized. Specifically, a new field is defined to indicate not to reset the NAV even if the NAVTimeout duration expires based on utilizing 1 bit corresponding to the EHT Reserved or Reserved.

bit 0: Indicates to reset the NAV based on the NAVTimeout duration expiring after receiving the corresponding MU-RTS TXS TF. (default)

bit 1: Indicates not to reset the NAV even based on the NAVTimeout duration expiring after receiving the corresponding MU-RTS TXS TF.

The SAP may also be protected during a time corresponding to the time allocated to the DAP through the CTS-to-Self frame (or CTS frame) additionally transmitted from the SAP, and may perform a NAV-set sequence procedure or an individual FE after SIFS/PIFS according to Rule 3) described above, following a TXOP return procedure that may be performed by the DAP before the allocated time expires.

On the other hand, a medium reservation procedure for C-TDMA presented in the present disclosure may be omitted in the following situations. Conditions and situations in which the medium reservation procedure is omitted may be added and are not limited.

i) Based on negotiating/setting not to support a TXOP return in a Multi-AP set configuration (i.e., negotiation for C-TDMA) procedure.

ii) Based on being indicated from the SAP that a TXOP return is not supported or being indicated that there is no need to perform a TXOP return in a Multi-AP selection procedure.

iii) Based on being indicated from the SAP that a TXOP return is not supported or being indicated that there is no need to perform a TXOP return in a TXOP sharing procedure.

The present disclosure proposes a medium reservation method for preventing a TXOP return fail issue that may occur in a C-TDMA procedure utilizing two TXOPs. Specifically, the DAP performing a NAV-set sequence process or a TXOP sharing process transmits a MU-RTS TXS TF or CTS-to-Self frame (or CTS frame) to the SAP, and the SAP responds with a CTS-to-Self frame (or CTS frame) for this, thereby causing neighboring STAs to set the NAV. There is an advantage that the SAP is protected by the NAV and may receive the TXOP return based on the proposed medium reservation method.

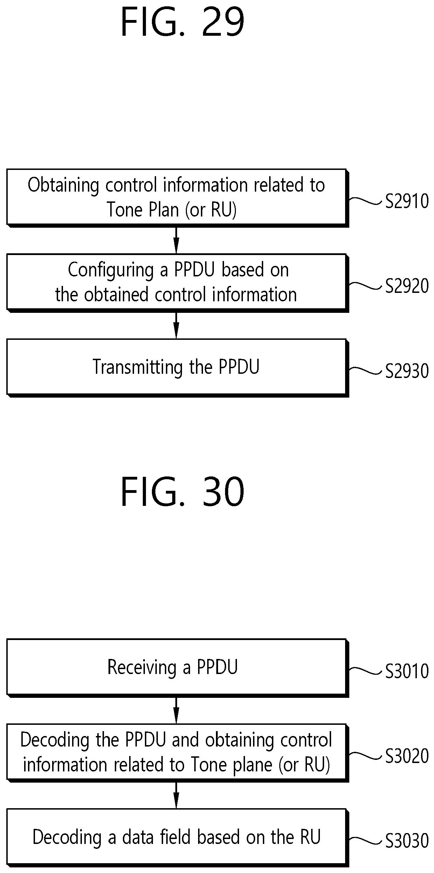

FIG. 29 is a flowchart illustrating the operation of a transmitting device according to the present embodiment.

The example of FIG. 29 may be performed by a transmitting device (AP and/or non-AP STA).

Some of each step (or detailed sub-step to be described later) of the example of FIG. 29 may be skipped/omitted.

Through step S2910, the transmitting device (transmitting STA) may obtain information about the above-described tone plan. As described above, the information about the tone plan includes the size and location of the RU, control information related to the RU, information about a frequency band including the RU, information about an STA receiving the RU, and the like.

Through step S2920, the transmitting device may construct/generate a PPDU based on the acquired control information. Configuring/generating the PPDU may include configuring/generating each field of the PPDU. That is, step S2920 includes configuring the EHT-SIG field including control information about the tone plan. That is, step S2920 includes configuring a field including control information (e.g., N bitmap) indicating the size/position of the RU; and/or configuring a field including an identifier of an STA receiving the RU (e.g., AID).

Also, step S2920 may include generating an STF/LTF sequence transmitted through a specific RU. The STF/LTF sequence may be generated based on a preset STF generation sequence/LTF generation sequence.

Also, step S2920 may include generating a data field (i.e., MPDU) transmitted through a specific RU.

The transmitting device may transmit the PPDU constructed through step S2920 to the receiving device based on step S2930.

While performing step S2930, the transmitting device may perform at least one of operations such as CSD, Spatial Mapping, IDFT/IFFT operation, and GI insertion.

A signal/field/sequence constructed according to the present specification may be transmitted in the form of FIG. 5.

FIG. 30 is a flowchart illustrating the operation of a receiving device according to the present embodiment.

The aforementioned PPDU may be received according to the example of FIG. 30.

The example of FIG. 30 may be performed by a receiving apparatus/device (AP and/or non-AP STA).

Some of each step (or detailed sub-step to be described later) of the example of FIG. 30 may be skipped/omitted.

The receiving device (receiving STA) may receive all or part of the PPDU through step S3010. The received signal may be in the form of FIG. 5.

A sub-step of step S3010 may be determined based on step S2930 of FIG. 29. That is, in step S3010, an operation of restoring the result of the CSD, Spatial Mapping, IDFT/IFFT operation, and GI insertion operation applied in step S2930 may be performed.

In step S3020, the receiving device may perform decoding on all/part of the PPDU. Also, the receiving device may obtain control information related to a tone plan (i.e., RU) from the decoded PPDU.

More specifically, the receiving device may decode the L-SIG and EHT-SIG of the PPDU based on the legacy STF/LTF and obtain information included in the L-SIG and EHT SIG fields. Information on various tone plans (i.e., RUs) described in this specification may be included in the EHT-SIG, and the receiving STA may obtain information on the tone plan (i.e., RU) through the EHT-SIG.

In step S3030, the receiving device may decode the remaining part of the PPDU based on information about the tone plan (i.e., RU) acquired through step S3020. For example, the receiving STA may decode the STF/LTF field of the PPDU based on information about one plan (i.e., RU). In addition, the receiving STA may decode the data field of the PPDU based on information about the tone plan (i.e., RU) and obtain the MPDU included in the data field.

In addition, the receiving device may perform a processing operation of transferring the data decoded through step S3030 to a higher layer (e.g., MAC layer). In addition, when generation of a signal is instructed from the upper layer to the PHY layer in response to data transmitted to the upper layer, a subsequent operation may be performed.

Hereinafter, the above-described embodiment will be described with reference to FIG. 1 to FIG. 30.

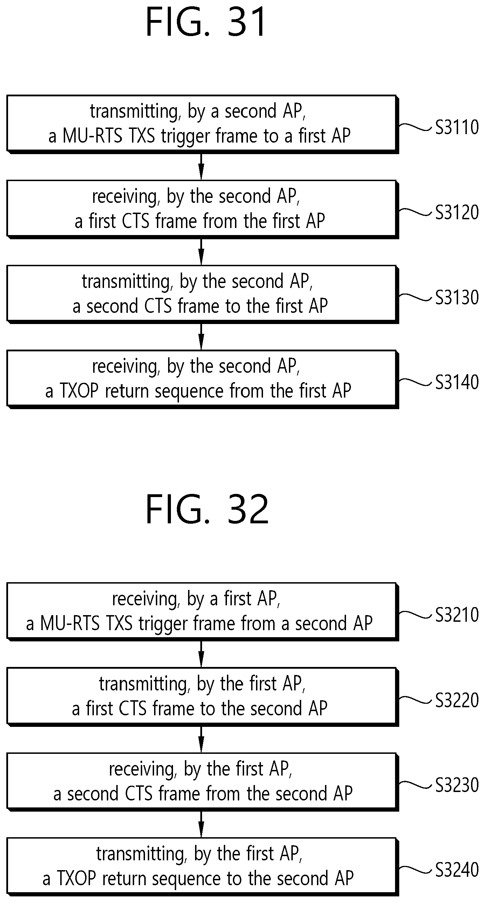

FIG. 31 is a flowchart illustrating a procedure of a method for performing a C-TDMA operation based on transmitting an additional CTS frame in terms of a Sharing AP based on the present embodiment.

The example of FIG. 31 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

An example of FIG. 31 may be performed in a second AP, the second AP may be set as a sharing AP (SAP) after negotiation in multi-AP communication, and the first AP may be set as a shared AP (DAP) after negotiation in multi-AP communication. First and second non-AP STAs of the present embodiment may correspond to at least one station (STA).

The present embodiment proposes a method for protecting a SAP by setting a NAV to prevent a third party STA or Overlapping Basic Service Set (OBSS) STA from occupying a medium based on transmitting an additional CTS frame when performing a C-TDMA operation in communication between Multi-Access Point (Multi-AP) (or Multi-AP operation). In particular, the present embodiment proposes a method for reserving a medium to prevent a TXOP return fail issue based on setting the NAV.

In step S3110, a second access point (AP) transmits a Multi User-Request to Send (MU-RTS) Transmit Opportunity (TXOP) sharing (TXS) trigger frame to a first AP.

In step S3120, the second AP receives a first Clear to Send (CTS) frame from the first AP.

In step S3130, the second AP transmits a second CTS frame to the first AP.

In step S3140, the second AP receives a TXOP return sequence from the first AP.

The second AP is a Sharing AP that controls coordination between a plurality of APs, and the first AP is a Shared AP that is allocated or shared with resources from the Sharing AP.

The first CTS frame is a response frame to the MU-RTS TXS trigger frame. A first Network Allocation Vector (NAV) is set for a first non-AP station (STA) based on the second CTS frame. Alternatively, a second NAV is set for the first non-AP STA based on the MU-RTS TXS trigger frame, and a NAV timer may be updated before a NAV timeout duration of the second NAV expires based on the second CTS frame. Alternatively, a third NAV is set for the first non-AP STA based on a first NAV setting sequence described later, and the NAV timer may be updated before a NAV timeout duration of the third NAV expires based on the second CTS frame. For example, channel access of the first non-AP STA may be suspended based on setting a new NAV or preventing a NAV timeout issue of an existing NAV due to the additionally transmitted second CTS frame.

At this time, the first non-AP STA does not participate in the coordination between the plurality of APs and is in a hidden node relationship with the first AP.

A scheme for the coordination between the plurality of APs may include a coordinated Multi-AP scheme such as Coordinated-Time Division Multiplexing Access (C-TDMA), Coordinated-Spatial Reuse (C-SR), Coordinated-beamforming (C-BF) or Coordinated-Orthogonal Frequency Division Multiple Access (C-OFMA).

In an example of the C-TDMA operation, an entity sharing a TXOP (SAP, here the second AP) and an entity being shared with the TXOP (DAP, here the first AP) are APs having different BSSs. However, a STA (third party STA or OBSS STA, here the first non-AP STA) that is in a hidden node relationship with the DAP and does not participate in the C-TDMA operation may determine that the medium is idle based on a duration in which the SAP shares the TXOP with the DAP, and thus may occupy the medium used by the SAP based on performing channel access. In addition, the third party STA or OBSS STA may occupy the medium based on resetting the NAV based on a NAV timeout duration due to the MU-RTS TXS trigger frame expiring based on failing to receive a response frame to the MU-RTS TXS trigger frame. For example, even based on the DAP performing the TXOP return based on using the time allocated from the SAP, a problem may occur in which the SAP may not receive the TXOP return because the third party STA or OBSS STA may occupy the medium.

Accordingly, the present embodiment proposes a method for reserving a medium to ensure that the SAP may receive the TXOP return in an environment for performing the C-TDMA. Specifically, a method for protecting the SAP is proposed based on setting a NAV (the first NAV) to prevent the third party STA or OBSS STA from occupying the medium based on transmitting an additional CTS frame (the second CTS frame).

For example, the present embodiment proposes a medium reservation method for preventing a Transmit Opportunity (TXOP) return fail issue that may occur in a C-TDMA procedure utilizing a plurality of TXOPs. There is an effect that a SAP may be protected from a NAV to prevent a third party STA or Overlapping Basic Service Set (OBSS) STA (the first non-AP STA) from occupying a medium based on the medium reservation method proposed in the present embodiment. For example, there is an effect that a DAP may allow neighboring STAs of the SAP to set a NAV during a corresponding time based on performing a frame exchange for a NAV-set sequence with the SAP in a time allocated from the SAP. Based on this, appropriate scheduling according to coordination between a plurality of APs may be performed, and an effect of expecting an increase in overall network throughput exists.

A time when the first NAV expires may be determined based on a value of an Allocation Duration subfield of a User Info field of the MU-RTS TXS trigger frame. The first non-AP STA may defer channel access during a duration in which the first NAV is set. The TXOP return sequence may be transmitted before the first NAV expires.

Since the first non-AP STA cannot perform channel access due to the first NAV until the TXOP return sequence is transmitted, a TXOP return from the DAP to the SAP based on the TXOP return sequence may always be guaranteed.

In addition, the present embodiment may propose a method for preventing and supplementing a NAV timeout issue based on adding a new signaling bit in the MU-RTS TXS trigger frame.

Specifically, the MU-RTS TXS trigger frame may include first and second bits. The first bit may include information that the second AP will transmit the second CTS frame within a certain time following the transmission of the MU-RTS TXS trigger frame. The second bit may include information indicating not to reset even if a NAV timeout duration of a second NAV set for the first non-AP STA based on the MU-RTS TXS trigger frame expires.

The first and second bits may be set based on using an Extremely High Throughput (EHT) Reserved bit or a Reserved bit of a Common Info field of the MU-RTS TXS trigger frame.

For example, based on the first bit being set to 0, the first bit may indicate that the second AP is not scheduled to transmit the second CTS frame within a certain time following the transmission of the MU-RTS TXS trigger frame. Based on the first bit being set to 1, the first bit may indicate that the second AP is scheduled to transmit the second CTS frame within a certain time following the transmission of the MU-RTS TXS trigger frame.

For example, based on the second bit being set to 0, the second bit may indicate to reset even if the NAV timeout duration of the second NAV set for the first non-AP STA based on the MU-RTS TXS trigger frame expires. Based on the second bit being set to 1, the second bit may indicate not to reset even if the NAV timeout duration of the second NAV set for the first non-AP STA based on the MU-RTS TXS trigger frame expires.

To prevent and supplement the timeout issue of the second NAV, it is preferable that both the first and second bits are set to 1.

A first AP may receive notification information for a first TXOP from the second AP. The first AP may recognize whether a TXOP is shared according to the MU-RTS TXS trigger frame based on the notification information for the first TXOP.

The first TXOP may be an entire duration including all of second to fourth TXOPs in which the first and second APs participating in the coordination between the plurality of APs individually perform a frame exchange. The first TXOP may be defined as a nominal TXOP scheduled by a Sharing AP for a C-TDMA operation.

The second AP transmits a first NAV-set sequence to a second non-AP STA during the second TXOP. At this time, the second non-AP STA may be a non-AP STA within a Basic Service Set (BSS) of the second AP.

A third NAV may be set for the first non-AP STA based on the first NAV-set sequence. A time when the third NAV expires and a time when the second TXOP ends may be determined based on a value of a Duration or Identifier (ID) field of the first NAV-set sequence.

The first CTS frame may be transmitted after a Short Inter Frame Space (SIFS) or a PCF (Point Coordination Function) IFS (PIFS) based on the MU-RTS TXS trigger frame being received.

A transition from the second TXOP to the third TXOP may be performed based on the transmission of the first CTS frame. The second TXOP may be a TXOP acquired by the second AP, and the third TXOP may be a TXOP acquired by the first AP.

In addition, the present embodiment describes a procedure for returning a TXOP holder from the DAP back to the SAP based on the DAP transmitting the TXOP return sequence.

A transition from the third TXOP to the fourth TXOP may be performed based on the transmission of the TXOP return sequence. The fourth TXOP may be a remaining TXOP reacquired by the second AP and may not exceed the duration of the first TXOP. This is because the first TXOP corresponds to an entire TXOP for the coordination between the plurality of APs. A time when the third TXOP ends may be determined based on the value of the Allocation Duration subfield of the User Info field of the MU-RTS TXS trigger frame. The time when the third TXOP ends and the time when the first NAV expires may be identical to each other.

The second AP may transmit a second NAV-set sequence to the second non-AP STA after a SIFS or PIFS based on receiving the TXOP return sequence. Here, the fourth TXOP may start based on the transmission of the second NAV-set sequence.

The first and second CTS frames may be a general CTS frame or a CTS-to-Self frame. Based on the first and second CTS frames being a CTS-to-Self frame, a reception response to the MU-RTS TXS trigger frame and a NAV-set sequence may be transmitted/received immediately (not after a SIFS or PIFS).

FIG. 32 is a flowchart illustrating a procedure of a method for performing a C-TDMA operation based on receiving an additional CTS frame in terms of a Shared AP based on the present embodiment.

The example of FIG. 32 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

An example of FIG. 32 may be performed in a first AP, the first AP may be set as a shared AP (DAP) after negotiation in multi-AP communication, and the second AP may be set as a sharing AP (SAP) after negotiation in the multi-AP communication. First and second non-AP STAs of the present embodiment may correspond to at least one station (STA).

The present embodiment proposes a method for protecting a SAP by setting a NAV to prevent a third party STA or Overlapping Basic Service Set (OBSS) STA from occupying a medium based on transmitting an additional CTS frame when performing a C-TDMA operation in communication between Multi-Access Point (Multi-AP) (or Multi-AP operation). In particular, the present embodiment proposes a method for reserving a medium to prevent a TXOP return fail issue based on setting the NAV.

In step S3210, a first access point (AP) receives a Multi User-Request to Send (MU-RTS) Transmit Opportunity (TXOP) sharing (TXS) trigger frame from a second AP.

In step S3220, the first AP transmits a first Clear to Send (CTS) frame to the second AP.

In step S3230, the first AP receives a second CTS frame from the second AP.

In step S3240, the first AP transmits a TXOP return sequence to the second AP.

The second AP is a Sharing AP that controls coordination between a plurality of APs, and the first AP is a Shared AP that is allocated or shared with resources from the Sharing AP.

The first CTS frame is a response frame to the MU-RTS TXS trigger frame. A first Network Allocation Vector (NAV) is set for a first non-AP station (STA) based on the second CTS frame. Alternatively, a second NAV is set for the first non-AP STA based on the MU-RTS TXS trigger frame, and a NAV timer may be updated before a NAV timeout duration of the second NAV expires based on the second CTS frame. Alternatively, a third NAV is set for the first non-AP STA based on a first NAV setting sequence described later, and the NAV timer may be updated before a NAV timeout duration of the third NAV expires based on the second CTS frame. For example, channel access of the first non-AP STA may be suspended based on setting a new NAV or preventing a NAV timeout issue of an existing NAV due to the additionally transmitted second CTS frame.

At this time, the first non-AP STA does not participate in the coordination between the plurality of APs and is in a hidden node relationship with the first AP.

A scheme for the coordination between the plurality of APs may include a coordinated Multi-AP scheme such as Coordinated-Time Division Multiplexing Access (C-TDMA), Coordinated-Spatial Reuse (C-SR), Coordinated-beamforming (C-BF) or Coordinated-Orthogonal Frequency Division Multiple Access (C-OFMA).

In an example of the C-TDMA operation, an entity sharing a TXOP (SAP, here the second AP) and an entity being shared with the TXOP (DAP, here the first AP) are APs having different BSSs. However, a STA (third party STA or OBSS STA, here the first non-AP STA) that is in a hidden node relationship with the DAP and does not participate in the C-TDMA operation may determine that the medium is idle based on a duration in which the SAP shares the TXOP with the DAP, and thus may occupy the medium used by the SAP based on performing channel access. In addition, the third party STA or OBSS STA may occupy the medium based on resetting the NAV based on a NAV timeout duration due to the MU-RTS TXS trigger frame expiring based on failing to receive a response frame to the MU-RTS TXS trigger frame. For example, even based on the DAP performing the TXOP return based on using the time allocated from the SAP, a problem may occur in which the SAP may not receive the TXOP return because the third party STA or OBSS STA may occupy the medium.

Accordingly, the present embodiment proposes a method for reserving a medium to ensure that the SAP may receive the TXOP return in an environment for performing the C-TDMA. Specifically, a method for protecting the SAP is proposed based on setting a NAV (the first NAV) to prevent the third party STA or OBSS STA from occupying the medium based on transmitting an additional CTS frame (the second CTS frame).

For example, the present embodiment proposes a medium reservation method for preventing a Transmit Opportunity (TXOP) return fail issue that may occur in a C-TDMA procedure utilizing a plurality of TXOPs. There is an effect that a SAP may be protected from a NAV to prevent a third party STA or Overlapping Basic Service Set (OBSS) STA (the first non-AP STA) from occupying a medium based on the medium reservation method proposed in the present embodiment. For example, there is an effect that a DAP may allow neighboring STAs of the SAP to set a NAV during a corresponding time based on performing a frame exchange for a NAV-set sequence with the SAP in a time allocated from the SAP. Based on this, appropriate scheduling according to coordination between a plurality of APs may be performed, and an effect of expecting an increase in overall network throughput exists.

A time when the first NAV expires may be determined based on a value of an Allocation Duration subfield of a User Info field of the MU-RTS TXS trigger frame. The first non-AP STA may defer channel access during a duration in which the first NAV is set. The TXOP return sequence may be transmitted before the first NAV expires.

Since the first non-AP STA cannot perform channel access due to the first NAV until the TXOP return sequence is transmitted, a TXOP return from the DAP to the SAP based on the TXOP return sequence may always be guaranteed.

In addition, the present embodiment may propose a method for preventing and supplementing a NAV timeout issue based on adding a new signaling bit in the MU-RTS TXS trigger frame.

Specifically, the MU-RTS TXS trigger frame may include first and second bits. The first bit may include information that the second AP will transmit the second CTS frame within a certain time following the transmission of the MU-RTS TXS trigger frame. The second bit may include information indicating not to reset even if a NAV timeout duration of a second NAV set for the first non-AP STA based on the MU-RTS TXS trigger frame expires.

The first and second bits may be set based on using an Extremely High Throughput (EHT) Reserved bit or a Reserved bit of a Common Info field of the MU-RTS TXS trigger frame.

For example, based on the first bit being set to 0, the first bit may indicate that the second AP is not scheduled to transmit the second CTS frame within a certain time following the transmission of the MU-RTS TXS trigger frame. Based on the first bit being set to 1, the first bit may indicate that the second AP is scheduled to transmit the second CTS frame within a certain time following the transmission of the MU-RTS TXS trigger frame.

For example, based on the second bit being set to 0, the second bit may indicate to reset even if the NAV timeout duration of the second NAV set for the first non-AP STA based on the MU-RTS TXS trigger frame expires. Based on the second bit being set to 1, the second bit may indicate not to reset even if the NAV timeout duration of the second NAV set for the first non-AP STA based on the MU-RTS TXS trigger frame expires.

To prevent and supplement the timeout issue of the second NAV, it is preferable that both the first and second bits are set to 1.

A first AP may receive notification information for a first TXOP from the second AP. The first AP may recognize whether a TXOP is shared according to the MU-RTS TXS trigger frame based on the notification information for the first TXOP.

The first TXOP may be an entire duration including all of second to fourth TXOPs in which the first and second APs participating in the coordination between the plurality of APs individually perform a frame exchange. The first TXOP may be defined as a nominal TXOP scheduled by a Sharing AP for a C-TDMA operation.

The second AP transmits a first NAV-set sequence to a second non-AP STA during the second TXOP. At this time, the second non-AP STA may be a non-AP STA within a Basic Service Set (BSS) of the second AP.

A third NAV may be set for the first non-AP STA based on the first NAV-set sequence. A time when the third NAV expires and a time when the second TXOP ends may be determined based on a value of a Duration or Identifier (ID) field of the first NAV-set sequence.

The first CTS frame may be transmitted after a Short Inter Frame Space (SIFS) or a PCF (Point Coordination Function) IFS (PIFS) based on the MU-RTS TXS trigger frame being received.

A transition from the second TXOP to the third TXOP may be performed based on the transmission of the first CTS frame. The second TXOP may be a TXOP acquired by the second AP, and the third TXOP may be a TXOP acquired by the first AP.

In addition, the present embodiment describes a procedure for returning a TXOP holder from the DAP back to the SAP based on the DAP transmitting the TXOP return sequence.

A transition from the third TXOP to the fourth TXOP may be performed based on the transmission of the TXOP return sequence. The fourth TXOP may be a remaining TXOP reacquired by the second AP and may not exceed the duration of the first TXOP. This is because the first TXOP corresponds to an entire TXOP for the coordination between the plurality of APs. A time when the third TXOP ends may be determined based on the value of the Allocation Duration subfield of the User Info field of the MU-RTS TXS trigger frame. The time when the third TXOP ends and the time when the first NAV expires may be identical to each other.

The second AP may transmit a second NAV-set sequence to the second non-AP STA after a SIFS or PIFS based on receiving the TXOP return sequence. Here, the fourth TXOP may start based on the transmission of the second NAV-set sequence.

The first and second CTS frames may be a general CTS frame or a CTS-to-Self frame. Based on the first and second CTS frames being a CTS-to-Self frame, a reception response to the MU-RTS TXS trigger frame and a NAV-set sequence may be transmitted/received immediately (not after a SIFS or PIFS).

< Device **configuration**>

The technical features of the present disclosure may be applied to various devices and methods. For example, the technical features of the present disclosure may be performed/supported through the device(s) of FIG. 1 and/or FIG. 13. For example, the technical features of the present disclosure may be applied to only part of FIG. 1 and/or FIG. 13. For example, the technical features of the present disclosure may be implemented based on the processing chip(s) 114 and 124 of FIG. 1, or implemented based on the processor(s) 111 and 121 and the memory(s) 112 and 122, or implemented based on the processor 610 and the memory 620 of FIG. 13. For example, the device according to the present disclosure receives a Multi User-Request to Send (MU-RTS) Transmit Opportunity (TXOP) sharing (TXS) trigger frame from a second access point (AP); transmits a first Clear to Send (CTS) frame to the second AP; receives a second CTS frame from the second AP; and transmits a TXOP return sequence to the second AP.

The technical features of the present disclosure may be implemented based on a computer readable medium (CRM). For example, a CRM according to the present disclosure is at least one computer readable medium including instructions designed to be executed by at least one processor.

The CRM may store instructions that perform operations including receiving a Multi User-Request to Send (MU-RTS) Transmit Opportunity (TXOP) sharing (TXS) trigger frame from a second access point (AP); transmitting a first Clear to Send (CTS) frame to the second AP; receiving a second CTS frame from the second AP; and transmitting a TXOP return sequence to the second AP. At least one processor may execute the instructions stored in the CRM according to the present disclosure. At least one processor related to the CRM of the present disclosure may be the processor 111, 121 of FIG. 1, the processing chip 114, 124 of FIG. 1, or the processor 610 of FIG. 13. Meanwhile, the CRM of the present disclosure may be the memory 112, 122 of FIG. 1, the memory 620 of FIG. 13, or a separate external memory/storage medium/disk.

The foregoing technical features of the present specification are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The claims recited in the present specification may be combined in a variety of ways. For example, the technical features of the method claims of the present specification may be combined to be implemented as a device, and the technical features of the device claims of the present specification may be combined to be implemented by a method. In addition, the technical characteristics of the method claim of the present specification and the technical characteristics of the device claim may be combined to be implemented as a device, and the technical characteristics of the method claim of the present specification and the technical characteristics of the device claim may be combined to be implemented by a method.

## Claims

1. A method in a wireless local area network (WLAN) system, the method comprising:

   receiving, by a first access point (AP), a Multi User-Request to Send (MU-RTS) Transmit Opportunity (TXOP) sharing (TXS) trigger frame from a second AP;
   transmitting, by the first AP, a first Clear to Send (CTS) frame to the second AP;
   receiving, by the first AP, a second CTS frame from the second AP; and
   transmitting, by the first AP, a Transmit Opportunity (TXOP) return sequence to the second AP,
   wherein the second AP is a Sharing AP that controls coordination between a plurality of APs,
   wherein the first AP is a Shared AP that is allocated or shared with resources from the Sharing AP,
   wherein the first CTS frame is a response frame to the MU-RTS TXS trigger frame,
   wherein a first Network Allocation Vector (NAV) is set for a first non-AP station (STA) based on the second CTS frame, and
   wherein the first non-AP STA does not participate in the coordination between the plurality of APs and is in a hidden node relationship with the first AP.

2. The method of claim 1, wherein a time when the first NAV expires is determined based on a value of an Allocation Duration subfield of a User Info field of the MU-RTS TXS trigger frame,

wherein the first non-AP STA defers channel access during a duration in which the first NAV is set, and
wherein the TXOP return sequence is transmitted before the first NAV expires.

3. The method of claim 1, wherein the MU-RTS TXS trigger frame includes first and second bits,

wherein the first bit includes information that the second AP will transmit the second CTS frame within a certain time following transmission of the MU-RTS TXS trigger frame,
wherein the second bit includes information indicating not to reset even if a NAV timeout duration of a second NAV set for the first non-AP STA based on the MU-RTS TXS trigger frame expires, and
wherein the first and second bits are set based on using an Extremely High Throughput (EHT) Reserved bit or a Reserved bit of a Common Info field of the MU-RTS TXS trigger frame.

4. The method of claim 2, further comprising: receiving, by the first AP, notification information for a first TXOP from the second AP; and

recognizing, by the first AP, whether a TXOP is shared according to the MU-RTS TXS trigger frame based on the notification information for the first TXOP,
wherein the first TXOP is an entire duration including all of second to fourth TXOPs in which the first and second APs participating in the coordination between the plurality of APs individually perform a frame exchange.

5. The method of claim 4, wherein the second AP transmits a first NAV-set sequence to a second non-AP STA during the second TXOP,

wherein the second non-AP STA is a non-AP STA within a Basic Service Set (BSS) of the second AP,
wherein a third NAV is set for the first non-AP STA based on the first NAV-set sequence, and
wherein a time when the third NAV expires and a time when the second TXOP ends are determined based on a value of a Duration or Identifier (ID) field of the first NAV-set sequence.

6. The method of claim 5, wherein the first CTS frame is transmitted after a Short Inter Frame Space (SIFS) or a PCF (Point Coordination Function) IFS (PIFS) based on the MU-RTS TXS trigger frame being received,

wherein a transition from the second TXOP to the third TXOP is performed based on transmission of the first CTS frame, and
wherein the second TXOP is a TXOP acquired by the second AP and the third TXOP is a TXOP acquired by the first AP.

7. The method of claim 6, wherein a transition from the third TXOP to the fourth TXOP is performed based on transmission of the TXOP return sequence,

wherein the fourth TXOP is a remaining TXOP reacquired by the second AP and does not exceed a duration of the first TXOP, and
wherein a time when the third TXOP ends is determined based on a value of the Allocation Duration subfield of the User Info field of the MU-RTS TXS trigger frame.

8. The method of claim 7, wherein the second AP transmits a second NAV-set sequence to the second non-AP STA after a SIFS or a PIFS based on receiving the TXOP return sequence, and
wherein the fourth TXOP starts based on transmission of the second NAV-set sequence.

9. A first access point (AP) in a wireless local area network (WLAN) system, the first AP comprising:

a memory;
a transceiver; and
a processor being operatively connected to the memory and the transceiver,
wherein the processor is configured to:

receive a Multi User-Request to Send (MU-RTS) Transmit Opportunity (TXOP) sharing (TXS) trigger frame from a second AP;
transmit a first Clear to Send (CTS) frame to the second AP;
receive a second CTS frame from the second AP; and
transmit a Transmit Opportunity (TXOP) return sequence to the second AP,
wherein the second AP is a Sharing AP that controls coordination between a plurality of APs,
wherein the first AP is a Shared AP that is allocated or shared with resources from the Sharing AP,
wherein the first CTS frame is a response frame to the MU-RTS TXS trigger frame,
wherein a first Network Allocation Vector (NAV) is set for a first non-AP station (STA) based on the second CTS frame, and
wherein the first non-AP STA does not participate in the coordination between the plurality of APs and is in a hidden node relationship with the first AP.

10. A method in a wireless local area network (WLAN) system, the method comprising:

transmitting, by a second access point (AP), a Multi User-Request to Send (MU-RTS) Transmit Opportunity (TXOP) sharing (TXS) trigger frame to a first AP;
receiving, by the second AP, a first Clear to Send (CTS) frame from the first AP;
transmitting, by the second AP, a second CTS frame to the first AP; and
receiving, by the second AP, a Transmit Opportunity (TXOP) return sequence from the first AP,
wherein the second AP is a Sharing AP that controls coordination between a plurality of APs,
wherein the first AP is a Shared AP that is allocated or shared with resources from the Sharing AP,
wherein the first CTS frame is a response frame to the MU-RTS TXS trigger frame,
wherein a first Network Allocation Vector (NAV) is set for a first non-AP station (STA) based on the second CTS frame, and
wherein the first non-AP STA does not participate in the coordination between the plurality of APs and is in a hidden node relationship with the first AP.

11. The method of claim 10, wherein a time when the first NAV expires is determined based on a value of an Allocation Duration subfield of a User Info field of the MU-RTS TXS trigger frame,

wherein the first non-AP STA defers channel access during a duration in which the first NAV is set, and
wherein the TXOP return sequence is transmitted before the first NAV expires.

12. The method of claim 10, wherein the MU-RTS TXS trigger frame includes first and second bits,

wherein the first bit includes information that the second AP will transmit the second CTS frame within a certain time following transmission of the MU-RTS TXS trigger frame,
wherein the second bit includes information indicating not to reset even if a NAV timeout duration of a second NAV set for the first non-AP STA based on the MU-RTS TXS trigger frame expires, and
wherein the first and second bits are set based on using an Extremely High Throughput (EHT) Reserved bit or a Reserved bit of a Common Info field of the MU-RTS TXS trigger frame.

13. The method of claim 11, further comprising: transmitting, by the second AP, notification information for a first TXOP to the first AP; and

wherein the first AP recognizes whether a TXOP is shared according to the MU-RTS TXS trigger frame based on the notification information for the first TXOP,
wherein the first TXOP is an entire duration including all of second to fourth TXOPs in which the first and second APs participating in the coordination between the plurality of APs individually perform a frame exchange.

14. The method of claim 13, further comprising: transmitting, by the second AP, a first NAV-set sequence to a second non-AP STA during the second TXOP,

wherein the second non-AP STA is a non-AP STA within a Basic Service Set (BSS) of the second AP,
wherein a third NAV is set for the first non-AP STA based on the first NAV-set sequence, and
wherein a time when the third NAV expires and a time when the second TXOP ends are determined based on a value of a Duration or Identifier (ID) field of the first NAV-set sequence.

15. The method of claim 14, wherein the first CTS frame is transmitted after a Short Inter Frame Space (SIFS) or a PCF (Point Coordination Function) IFS (PIFS) based on the MU-RTS TXS trigger frame being received,

wherein a transition from the second TXOP to the third TXOP is performed based on transmission of the first CTS frame, and
wherein the second TXOP is a TXOP acquired by the second AP and the third TXOP is a TXOP acquired by the first AP.

16. The method of claim 15, wherein a transition from the third TXOP to the fourth TXOP is performed based on transmission of the TXOP return sequence,

wherein the fourth TXOP is a remaining TXOP reacquired by the second AP and does not exceed a duration of the first TXOP, and
wherein a time when the third TXOP ends is determined based on a value of the Allocation Duration subfield of the User Info field of the MU-RTS TXS trigger frame.

17. The method of claim 16, wherein the second AP transmits a second NAV-set sequence to the second non-AP STA after a SIFS or a PIFS based on receiving the TXOP return sequence, and
wherein the fourth TXOP starts based on transmission of the second NAV-set sequence.

18. A second access point (AP) in a wireless local area network (WLAN) system, the second AP comprising:

a memory;
a transceiver; and
a processor being operatively connected to the memory and the transceiver,
wherein the processor is configured to:

transmit a Multi User-Request to Send (MU-RTS) Transmit Opportunity (TXOP) sharing (TXS) trigger frame to a first AP;
receive a first Clear to Send (CTS) frame from the first AP;
transmit a second CTS frame to the first AP; and
receive a Transmit Opportunity (TXOP) return sequence from the first AP,
wherein the second AP is a Sharing AP that controls coordination between a plurality of APs,
wherein the first AP is a Shared AP that is allocated or shared with resources from the Sharing AP,
wherein the first CTS frame is a response frame to the MU-RTS TXS trigger frame,
wherein a first Network Allocation Vector (NAV) is set for a first non-AP station (STA) based on the second CTS frame, and
wherein the first non-AP STA does not participate in the coordination between the plurality of APs and is in a hidden node relationship with the first AP.

19. A computer readable medium including an instruction being executed by at least one processor and performing a method comprising the steps of:

receiving a Multi User-Request to Send (MU-RTS) Transmit Opportunity (TXOP) sharing (TXS) trigger frame from a second access point (AP);
transmitting a first Clear to Send (CTS) frame to the second AP;
receiving a second CTS frame from the second AP; and
transmitting a Transmit Opportunity (TXOP) return sequence to the second AP,
wherein the second AP is a Sharing AP that controls coordination between a plurality of APs,
wherein a first AP is a Shared AP that is allocated or shared with resources from the Sharing AP,
wherein the first CTS frame is a response frame to the MU-RTS TXS trigger frame,
wherein a first Network Allocation Vector (NAV) is set for a first non-AP station (STA) based on the second CTS frame, and
wherein the first non-AP STA does not participate in the coordination between the plurality of APs and is in a hidden node relationship with the first AP.

20. A device in a wireless local area network (WLAN) system, the device comprising:

a memory; and
a processor being operatively connected to the memory,
wherein the processor is configured to:

receive a Multi User-Request to Send (MU-RTS) Transmit Opportunity (TXOP) sharing (TXS) trigger frame from a second access point (AP);
transmit a first Clear to Send (CTS) frame to the second AP;
receive a second CTS frame from the second AP; and
transmit a Transmit Opportunity (TXOP) return sequence to the second AP,
wherein the second AP is a Sharing AP that controls coordination between a plurality of APs,
wherein a first AP is a Shared AP that is allocated or shared with resources from the Sharing AP,
wherein the first CTS frame is a response frame to the MU-RTS TXS trigger frame,
wherein a first Network Allocation Vector (NAV) is set for a first non-AP station (STA) based on the second CTS frame, and
wherein the first non-AP STA does not participate in the coordination between the plurality of APs and is in a hidden node relationship with the first AP.

# FIG. 1

110

120

1st STA

113    111

| Transceiver | | Processor |

112

| Memory |

2nd STA

123    121

| Transceiver | | Processor |

122

| Memory |

(a)

110

120

113 — | Transceiver |

114 — | Processing Chip

111 — | Processor |

112 — | Memory

115 — | Software Code |

| Transceiver | — 123

Processing Chip | — 124

| Processor | — 121

Memory | — 122

| Software Code | — 125

(b)

# FIG. 2

# FIG. 3

STA · AP

Probe Request →
Probe Response ←
S310
Discovery

Authentication Request →
Authentication Response ←
S320
Authentication

Association Request →
Association Response ←
S330
Association

RSNA Request →
RSNA Response ←
S340
Security setup

# FIG. 4

EP 4 753 358 A1

# FIG. 5

| 8μs | 8μs | 4μs | 4μs | | | | | |
|---|---|---|---|---|---|---|---|---|
| L-LTF | L-STF | L-SIG | RL-SIG | U-SIG | UHR-SIG | UHR-STF | UHR-LTF | Data |

# FIG. 6

FIG. 7

# FIG. 8

EP 4 753 358 A1

# FIG. 9

```
         930    SIFS        942                   SIFS     950
                    ┌──────────────────────────┐
                    │ Trigger-based PPDU STA n │
          ┌───────┐ ├──────────────────────────┤ ┌──────┐
          │Trigger│ │      941        ⋮        │ │  BA  │
          │ frame │ ├──────────────────────────┤ │      │
          └───────┘ │ Trigger-based PPDU STA 1 │ └──────┘
                    └──────────────────────────┘

  ···     ◄──────────────── TXOP (925) ──────────────────►
```

# FIG. 10

EP 4 753 358 A1

FIG. 11

# FIG. 12

# FIG. 13

# FIG. 14

STX

# FIG. 15

C-OFDMA

# FIG. 16

CBF

# FIG. 17

AP selection

# FIG. 18

# FIG. 19

# FIG. 20

TXOP (obtained by the Sharing AP)

Time allocated in MU-RTS TXS TF

Remaining TXOP

Sharing AP
(BSS 1)

Non-AP STA 1
(BSS 1)

Shared AP
(BSS 2)

Non-AP STA 2
(BSS 2)

MU-RTS
TXS

CTS

Shared AP's frame exchanges
(Data to non-AP STAs in BSS 2)

# FIG. 21

Nominal TXOP Duration (virtual TXOP) for C-TDMA operation

Basic TXOP Duration (actual TXOP) by sharing AP

Basic TXOP

Time allocated in MU-RTS TXS TF

**Sharing AP (BSS 1)**

NAV-set sequence ··· Frame exchange sequence | MU-RTS TXS TF | NAV-set sequence ···

EDCA Channel Access

Nominal TXOP is notified during the basic TXOP duration

*SIFS/PIFS

Basic TXOP Duration by Shared AP

**Shared AP (BSS 2)**

CTS | NAV-set sequence | Frame exchange sequence | TXOP return sequence

EDCA Channel Access

*SIFS/PIFS

TXOP sharing procedure

TXOP return procedure

# FIG. 22

EP 4 753 358 A1

# FIG. 23

EP 4 753 358 A1

# FIG. 24

EP 4 753 358 A1

# FIG. 25

EP 4 753 358 A1

# FIG. 26

# FIG. 27

EP 4 753 358 A1

# FIG. 28

STA 3
(BSS 3)
(not participating
in C-TDMA)

* NAVTimeout

NAV (set by AP 1)    NAV (CTS-to-Self)

EP 4 753 358 A1

Nominal TXOP Duration for C-TDMA operation

Basic TXOP Duration    Basic TXOP

Time allocated in MU-RTS TXS TF

AP 1
(BSS 1)
(Sharing AP)

NAV-set
sequence    · · ·    MU-RTS
TXS TF    CTS-to-Self
(or) CTS    NAV-set
sequence

*SIFS/PIFS

Basic TXOP Duration

AP 2
(BSS 2)
(Shared AP)

CTS (or)
CTS-to-Self    NAV-set
sequence
(or) FE    · · ·    TXOP return
sequence

# FIG. 29

```
┌─────────────────────────────────────┐
│ Obtaining control information related to │ ⌐ S2910
│         Tone Plan (or RU)             │
└─────────────────────────────────────┘
                  │
                  ▼
┌─────────────────────────────────────┐
│     Configuring a PPDU based on       │ ⌐ S2920
│   the obtained control information     │
└─────────────────────────────────────┘
                  │
                  ▼
┌─────────────────────────────────────┐
│         Transmitting the PPDU         │ ⌐ S2930
└─────────────────────────────────────┘
```

# FIG. 30

```
┌─────────────────────────────────────┐
│           Receiving a PPDU            │ ⌐ S3010
└─────────────────────────────────────┘
                  │
                  ▼
┌─────────────────────────────────────┐
│ Decoding the PPDU and obtaining control │ ⌐ S3020
│  information related to Tone plane (or RU) │
└─────────────────────────────────────┘
                  │
                  ▼
┌─────────────────────────────────────┐
│   Decoding a data field based on the RU │ ⌐ S3030
└─────────────────────────────────────┘
```

# FIG. 31

transmitting, by a second AP,
a MU-RTS TXS trigger frame to a first AP — S3110

receiving, by the second AP,
a first CTS frame from the first AP — S3120

transmitting, by the second AP,
a second CTS frame to the first AP — S3130

receiving, by the second AP,
a TXOP return sequence from the first AP — S3140

# FIG. 32

receiving, by a first AP,
a MU-RTS TXS trigger frame from a second AP — S3210

transmitting, by the first AP,
a first CTS frame to the second AP — S3220

receiving, by the first AP,
a second CTS frame from the second AP — S3230

transmitting, by the first AP,
a TXOP return sequence to the second AP — S3240

## INTERNATIONAL SEARCH REPORT

| International application No. |
|---|
| **PCT/KR2024/012732** |

**A. CLASSIFICATION OF SUBJECT MATTER**

**H04W 74/04**(2009.01)i; **H04W 74/00**(2009.01)i; **H04W 28/26**(2009.01)i; **H04W 72/0446**(2023.01)i; **H04J 3/16**(2006.01)i; **H04W 84/12**(2009.01)i; **H04W 74/0816**(2024.01)i; **H04W 72/50**(2023.01)i; **H04L 5/22**(2006.01)i

According to International Patent Classification (IPC) or to both national classification and IPC

**B. FIELDS SEARCHED**

Minimum documentation searched (classification system followed by classification symbols)

H04W 74/04(2009.01); H04W 72/04(2009.01); H04W 72/12(2009.01); H04W 74/00(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 공유 액세스 포인트(sharing AP), 공유된 액세스 포인트(shared AP), 전송 기회 반환 시퀀스(TXOP return sequence), CTS 프레임(frame), 네트워크 할당 벡터(NAV), 히든 노드(hidden node)

**C. DOCUMENTS CONSIDERED TO BE RELEVANT**

| Category* | Citation of document, with indication, where appropriate, of the relevant passages | Relevant to claim No. |
|---|---|---|
| A | NOH, Si-Chan et al. Considerations on Return TXOP between multiple APs. doc.: IEEE 802.11-23/1327r0. 11 September 2023.<br>See slides 5-8. | 1-20 |
| A | SUN, Yanjun et al. Follow-up on Coordinated TDMA (C-TDMA). doc.: IEEE 802.11-23/0739r0. 08 July 2023.<br>See slide 4. | 1-20 |
| A | KIM, Geonhwan et al. Thoughts on Coordinated TDMA. doc.: IEEE 802.11-23/1085r0. 07 August 2023.<br>See slides 2-8. | 1-20 |
| A | WO 2022-265256 A1 (LG ELECTRONICS INC.) 22 December 2022 (2022-12-22)<br>See paragraphs [0215]-[0231]; and figure 14. | 1-20 |
| A | US 2023-0292363 A1 (TELEFONAKTIEBOLAGET LM ERICSSON (PUBL)) 14 September 2023 (2023-09-14)<br>See paragraphs [0006]-[0090]. | 1-20 |

☐ Further documents are listed in the continuation of Box C.    ☑ See patent family annex.

| | |
|---|---|
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **26 November 2024** | **26 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/012732**

| Patent document cited in search report | | | Publication date (day/month/year) | Patent family member(s) | | | Publication date (day/month/year) |
|---|---|---|---|---|---|---|---|
| WO | 2022-265256 | A1 | 22 December 2022 | EP | 4358617 | A1 | 24 April 2024 |
| | | | | KR | 10-2024-0019775 | A | 14 February 2024 |
| | | | | US | 2024-0283587 | A1 | 22 August 2024 |
| US | 2023-0292363 | A1 | 14 September 2023 | EP | 4162757 | A1 | 12 April 2023 |
| | | | | WO | 2021-244760 | A1 | 09 December 2021 |

Form PCT/ISA/210 (patent family annex) (July 2022)